(19) Europäisches Patentamt / European Patent Office / Office européen des brevets

(11) **EP 4 354 464 A1**

(12) **EUROPEAN PATENT APPLICATION**
published in accordance with Art. 153(4) EPC

(43) Date of publication:
**17.04.2024 Bulletin 2024/16**

(21) Application number: **22820002.8**

(22) Date of filing: **16.05.2022**

(51) International Patent Classification (IPC):
$H01B\ 1/06^{(2006.01)}$    $H01B\ 1/12^{(2006.01)}$
$H01M\ 10/0562^{(2010.01)}$    $H01M\ 10/0565^{(2010.01)}$
$H01M\ 10/0585^{(2010.01)}$

(52) Cooperative Patent Classification (CPC):
H01B 1/06; H01B 1/12; H01M 10/0562;
H01M 10/0565; H01M 10/0585; Y02E 60/10;
Y02P 70/50

(86) International application number:
**PCT/JP2022/020306**

(87) International publication number:
**WO 2022/259819 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.06.2021 JP 2021095219**

(71) Applicant: **Panasonic Intellectual Property
Management Co., Ltd.
Kadoma-shi, Osaka 571-0057 (JP)**

(72) Inventors:
• **OSHIMA, Tatsuya**
  **Tokyo 103-0022 (JP)**
• **KANEYAMA, Akio**
  **Tokyo 103-0022 (JP)**
• **MORIOKA, Kazuhiro**
  **Tokyo 103-0022 (JP)**
• **KAWASE, Akira**
  **Tokyo 103-0022 (JP)**

(74) Representative: **Grünecker Patent- und
Rechtsanwälte
PartG mbB
Leopoldstraße 4
80802 München (DE)**

(54) **SOLID ELECTROLYTE COMPOSITION, METHOD FOR PRODUING MULTIALYER BODY THAT COMPRISES SOLID ELECTROLYTE SHEET AND ELECTRODE, AND METHOD FOR PRODUING BATTERY**

(57) A solid electrolyte composition 1000 contains a solvent 102 and an ion conductor 111 dispersed in the solvent102, the ion conductor 111 including a solid electrolyte 101 and a binder 103, wherein $0.40 < S_\beta/S_\alpha < 0.80$ is satisfied, where $S_\alpha$ represents a specific surface area of the solid electrolyte 101, and $S_\beta$ represents a specific surface area of the ion conductor 111. For the solid electrolyte composition 1000, $0.45 < S_\beta/S_\alpha < 0.75$ may be satisfied.

FIG. 1

EP 4 354 464 A1

**Description**

Technical Field

The present disclosure relates to a solid electrolyte composition, a method for manufacturing a multilayer body including a solid electrolyte sheet and an electrode, and a method for manufacturing a battery.

Background Art

PTL 1 discloses producing a multilayer body including a solid electrolyte sheet and an electrode by applying a solid electrolyte composition containing a solvent, a solid electrolyte, and a binder to an electrode and drying the resulting coating. Such a method for producing a multilayer body is referred to as the wet-on-dry technique.

Citation List

Patent Literature

PTL 1: Japanese Unexamined Patent Application Publication No. 2020-126777

Summary of Invention

An object of the present disclosure is to provide a solid electrolyte composition suitable for the wet-on-dry technique.
A solid electrolyte composition in an aspect of the present disclosure includes:

a solvent; and
an ion conductor dispersed in the solvent, the ion conductor including a solid electrolyte and a binder, wherein: $0.40 < S_\beta/S_\alpha < 0.80$ is satisfied, where $S_\alpha$ represents a specific surface area of the solid electrolyte, and $S_\beta$ represents a specific surface area of the ion conductor.

The present disclosure provides a solid electrolyte composition suitable for the wet-on-dry technique.

Brief Description of Drawings

[Fig. 1] Fig. 1 is a schematic diagram of a solid electrolyte composition according to Embodiment 1.
[Fig. 2] Fig. 2 is a diagram for describing a method for identifying the percentage solvent retention of a solid electrolyte composition.
[Fig. 3] Fig. 3 is a flowchart illustrating a method for manufacturing a multilayer body according to Embodiment 2.
[Fig. 4] Fig. 4 is a cross-sectional diagram of a multilayer body according to Embodiment 2.
[Fig. 5] Fig. 5 is a cross-sectional diagram of a battery according to Embodiment 3.

Description of Embodiments

(Underlying Knowledge Forming Basis of the Present Disclosure)

In the field of conventional secondary batteries, organic electrolyte solutions obtained by dissolving electrolyte salts in organic solvents are commonly used. Secondary batteries using organic electrolyte solutions present a concern for liquid leakage. The large amount of heat that is generated when short-circuiting, for example, occurs has also been pointed out.
Meanwhile, all-solid-state secondary batteries, which use inorganic solid electrolytes instead of organic electrolyte solutions, are attracting attention. All-solid-state secondary batteries are free from liquid leakage. Since inorganic solid electrolytes exhibit high thermal stability, it is also expected that heat generation is reduced when short-circuiting, for example, occurs.
Putting an all-solid-state secondary battery using a solid electrolyte into practical use requires preparing a solid electrolyte composition containing a solid electrolyte and having flowability. For example, a solid electrolyte sheet can be formed by applying the solid electrolyte composition to a surface of an electrode. The solid electrolyte sheet serves as, for example, a separator in the battery. Improving the energy density of the battery requires thinning the solid electrolyte sheet as a separator while preventing contact between the positive and negative electrodes.

Thinning the solid electrolyte sheet used as a separator requires reducing the wet film thickness in the application of the solid electrolyte composition using a coater, such as a die coater. In the present disclosure, wet film thickness refers to the thickness of the entire film of the solid electrolyte composition formed by coating. With a reduced wet film thickness, the applied solid electrolyte composition is sensitive to the impact of, for example, wettability of the electrode and irregularities in the electrode. Once streaks or similar defects caused by such an impact occur in the dried coating, it is difficult to guarantee its function as a separator. Dried coating refers to a film obtained by removing solvent from the applied solid electrolyte composition. Streaks refers to a streak pattern that forms as a result of nonuniform thickness of a coating. The electrode is typically composed of a wide variety of materials including an active material, a solid electrolyte, and a binder and includes an active material layer having a relatively large porosity. When a solid electrolyte composition is applied onto the active material layer by the wet-on-dry technique, therefore, it is likely that streaks form on the coating as a result of the solvent contained in the solid electrolyte composition penetrating into the active material layer.

According to an investigation by the present inventors, producing a good solid electrolyte sheet with reduced formation of streaks requires that solvent be retained in the solid electrolyte composition to some extent. When a solid electrolyte composition with low performance in solvent retention is used, it is likely that streaks form on the solid electrolyte sheet. When a solid electrolyte composition with low performance in solvent retention is used, therefore, obtaining a solid electrolyte sheet that reliably prevents the contact between the positive and negative electrodes requires applying the solid electrolyte composition under large wet film thickness conditions. In contrast, if the performance in solvent retention of the solid electrolyte composition can be improved, the formation of streaks is reduced even if the wet film thickness is adjusted to be small. That is, safety can be ensured even if the thickness of the solid electrolyte sheet is designed to be small.

The approach of reducing the penetration of the solvent by compressing the electrode beforehand prior to applying the solid electrolyte composition is also possible. If excessive compression is performed regarding an electrode, however, the bondability between a current collector and the active material layer and the bondability between the active material layer and the solid electrolyte sheet, for example, can decrease, and, as a result, the characteristics of the battery can decrease. Producing a thin solid electrolyte sheet with reduced formation of streaks, therefore, needs improving the performance in solvent retention of the solid electrolyte composition.

Preparing a solid electrolyte composition having flowability requires mixing, for example, an ion conductor including a solid electrolyte and a binder with an organic solvent. The present inventors prepared solid electrolyte compositions by mixing various ion conductors and organic solvents and investigated the performance in solvent retention of the resulting solid electrolyte compositions. As a result, it was found that particular solid electrolyte compositions exhibit improved performance in solvent retention. It was also found that when a solid electrolyte composition with improved performance in solvent retention is used, a solid electrolyte sheet with reduced formation of streaks can be produced even if the wet film thickness is adjusted to be smaller in applying the solid electrolyte composition onto an electrode. From these points of view, the present inventors have conceived of the configurations of the present disclosure.

(Summary of Aspects of the Present Disclosure)

A solid electrolyte composition according to a first aspect of the present disclosure includes:

a solvent; and
an ion conductor dispersed in the solvent, the ion conductor including a solid electrolyte and a binder, wherein:
$0.40 < S_\beta/S_\alpha < 0.80$ is satisfied, where $S_\alpha$ represents a specific surface area of the solid electrolyte, and $S_\beta$ represents a specific surface area of the ion conductor.

According to the first aspect, the solid electrolyte composition tends to be superior in performance in solvent retention. With such a solid electrolyte composition, a thin and good solid electrolyte sheet can be easily produced by the wet-on-dry technique. With this solid electrolyte sheet, the energy density of a battery can be improved. A solid electrolyte sheet formed from the solid electrolyte composition, furthermore, tends to exhibit a reduced loss of ionic conductivity. Overall, the solid electrolyte composition is suitable for the wet-on-dry technique.

In a second aspect of the present disclosure, the solid electrolyte composition according to the first aspect may be one for which, for example, $0.45 < S_\beta/S_\alpha < 0.75$ is satisfied.

According to the second aspect, the performance in solvent retention of the solid electrolyte composition can be further improved.

In a third aspect of the present disclosure, the solid electrolyte composition according to the first or second aspect may be one for which, for example, $0.45 < S_\beta/S_\alpha < 0.70$ is satisfied.

According to the third aspect, the performance in solvent retention of the solid electrolyte composition can be further improved.

In a fourth aspect of the present disclosure, the solid electrolyte composition according to any one of the first to third aspects may be one in which, for example, the binder includes an elastomer.

According to the fourth aspect, the elastomer tends to be superior in flexibility and elasticity. The elastomer, therefore, is suitable for use as a binder in a solid electrolyte sheet formed from the solid electrolyte composition.

In a fifth aspect of the present disclosure, the solid electrolyte composition according to the fourth aspect may be one in which, for example, the elastomer includes a repeating unit derived from styrene.

According to the fifth aspect, the elastomer tends to be superior in flexibility and elasticity. The elastomer, therefore, is suitable for use as a binder in a solid electrolyte sheet formed from the solid electrolyte composition.

In a sixth aspect of the present disclosure, the solid electrolyte composition according to any one of the first to fifth aspects may be one in which, for example, the solvent includes an aromatic hydrocarbon.

According to the sixth aspect, the solubility of the binder in aromatic hydrocarbons tends to be high. In particular, an elastomer including a repeating unit derived from styrene has high solubility in aromatic hydrocarbons. When the solubility of the binder in aromatic hydrocarbons is high, the binder can be adsorbed onto the solid electrolyte more efficiently in the solid electrolyte composition. Through this, the performance in solvent retention of the solid electrolyte composition can be further improved.

In a seventh aspect of the present disclosure, the solid electrolyte composition according to the sixth aspect may be one in which, for example, the solvent includes tetralin.

According to the seventh aspect, the tetralin has a relatively high boiling point. With tetralin, not only is the performance in solvent retention of the solid electrolyte composition improved, but also the solid electrolyte composition can be manufactured in a stable manner through a kneading process.

In an eighth aspect of the present disclosure, the solid electrolyte composition according to any one of the first to seventh aspects may be one that, for example, further contains a dispersant.

According to the eighth aspect, the dispersant is able to, for example, lessen interactions between particles of the solid electrolyte. With a dispersant, therefore, the binder can be adsorbed onto the solid electrolyte more efficiently. Through this, the performance in solvent retention of the solid electrolyte composition can be further improved.

In a ninth aspect of the present disclosure, the solid electrolyte composition according to the eighth aspect may be one in which, for example, the dispersant includes an amine compound.

According to the ninth aspect, the amine compound is suitable for improving the dispersibility of the solid electrolyte. The amine compound is suitable for use as a dispersant in the solid electrolyte composition.

In a tenth aspect of the present disclosure, the solid electrolyte composition according to the ninth aspect may be one in which, for example, the dispersant includes imidazoline or an imidazoline derivative.

According to the tenth aspect, the imidazoline or imidazoline derivative is suitable for improving the dispersibility of the solid electrolyte. The imidazoline or imidazoline derivative is suitable for use as a dispersant in the solid electrolyte composition.

A manufacturing method according to an eleventh aspect of the present disclosure is:
a method for manufacturing a multilayer body including a solid electrolyte sheet and an electrode, the method including:

applying the solid electrolyte composition according to any one of the first to tenth aspects onto an electrode to form a coating; and
removing the solvent from the coating to produce a solid electrolyte sheet.

According to the eleventh aspect, a multilayer body including a good solid electrolyte sheet with reduced formation of streaks can be manufactured.

A method according to a twelfth aspect of the present disclosure for manufacturing a battery includes:

applying the solid electrolyte composition according to any one of the first to tenth aspects onto a first electrode to form a coating;
removing the solvent from the coating to produce a solid electrolyte sheet; and
placing a second electrode on the solid electrolyte sheet.

According to the twelfth aspect, the thinning of an electrolyte layer included in the battery can be attempted. A battery having a high energy density, therefore, can be manufactured.

Embodiments of the present disclosure will now be described with reference to drawings. The present disclosure is not limited to the following embodiments.

(Embodiment 1)

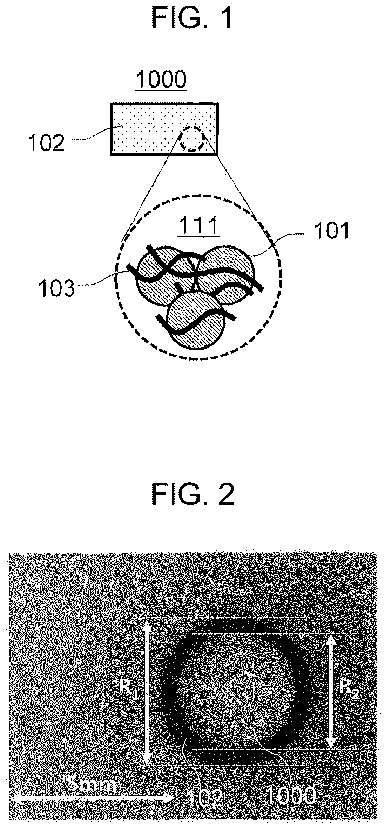

Fig. 1 is a schematic diagram of a solid electrolyte composition 1000 according to Embodiment 1. The solid electrolyte composition 1000 contains an ion conductor 111 and a solvent 102. The ion conductor 111 includes a solid electrolyte 101 and a binder 103. The ion conductor 111 is dispersed or dissolved in the solvent 102. The solid electrolyte 101 and the binder 103, therefore, are dispersed or dissolved in the solvent 102. The relation $0.40 < S_\beta/S_\alpha < 0.80$ is satisfied, where $S_\alpha$ represents the specific surface area of the solid electrolyte 101, and $S_\beta$ represents the specific surface area of the ion conductor 111.

This configuration improves the performance in solvent retention of the solid electrolyte composition 1000 according to Embodiment 1. By manufacturing a solid electrolyte sheet using the solid electrolyte composition 1000, therefore, a good solid electrolyte sheet with reduced formation of streaks can be obtained. More specifically, a multilayer body including a solid electrolyte sheet with reduced formation of streaks and an electrode can be produced easily. With this solid electrolyte sheet, furthermore, the energy density of a battery can be improved by attempting the thinning of an electrolyte layer included in the battery. An example of a battery is an all-solid-state secondary battery.

In PTL 1 discloses producing a multilayer body including a solid electrolyte sheet and an electrode by the wet-on-dry technique using a solid electrolyte composition containing a solvent, a solid electrolyte, and a binder. With the solid electrolyte composition disclosed in PTL 1, however, it is difficult to produce a solid electrolyte sheet with reduced formation of defects such as streaks while limiting the loss of ionic conductivity. In PTL 1, nothing is disclosed about the fact that the specific surface area of an ion conductor, for example, contained in a solid electrolyte composition has impact on the performance in solvent retention of the solid electrolyte composition.

The present inventors investigated solid electrolyte compositions containing an ion conductor and a solvent. As a result, the present inventors found that when the ratio $S_\beta/S_\alpha$ of the specific surface area $S_\beta$ of the ion conductor to the specific surface area $S_\alpha$ of the solid electrolyte is greater than or equal to 0.80, the performance in solvent retention of the solid electrolyte composition decreases. It was also found that in that case, defects occur in a solid electrolyte sheet formed from the solid electrolyte composition. The formation of defects was significant particularly when the solid electrolyte composition was applied onto the electrode with the wet film thickness set small for the purpose of thinning the solid electrolyte sheet. Presumably, the formation of defects results from the solvent contained in the solid electrolyte composition penetrating into an active material layer of the electrode when the solid electrolyte composition is applied onto the electrode. More specifically, the solvent used in a solid electrolyte composition is typically a solvent of low reactivity with the solid electrolyte in order that the associated decrease in the ionic conductivity of the solid electrolyte will be reduced. As a result, the interactions between the solid electrolyte and the solvent are slight, and thus when the solid electrolyte composition is applied onto the active material layer, the solvent is abruptly lost from around the solid electrolyte. This causes the solid electrolyte to separate out rapidly. As a result, presumably, streaks or similar defects occur in the solid electrolyte sheet.

The present inventors also found that when the ratio $S_\beta/S_\alpha$ described above is less than or equal to 0.40, the ionic conductivity of the ion conductor falls abruptly. Presumably, the abrupt fall in ionic conductivity results from the inhibition of ion conduction caused by particles of the solid electrolyte excessively adsorbing the binder and the binder positioning itself between multiple particles of the solid electrolyte.

The present inventors further advanced their investigations based on these findings. As a result, it was found that by using a solid electrolyte composition for which the ratio $S_\beta/S_\alpha$ described above is greater than 0.40 and less than 0.80, damage to performance in solvent retention is discouraged, and the abrupt fall in the ionic conductivity of the ion conductor can be reduced at the same time. As mentioned above, in Embodiment 1, $0.40 < S_\beta/S_\alpha < 0.80$ is satisfied, where $S_\alpha$ represents the specific surface area of the solid electrolyte 101, and $S_\beta$ represents the specific surface area of the ion conductor 111. This allows the performance in solvent retention of the solid electrolyte composition 1000 to be improved. By using a solid electrolyte composition with high performance in solvent retention, furthermore, a thinner solid electrolyte sheet can be easily manufactured by the wet-on-dry technique. With this solid electrolyte sheet, the energy density of a battery can be improved.

In Embodiment 1, $0.45 < S_\beta/S_\alpha < 0.75$ may be satisfied for the ratio $S_\beta/S_\alpha$. This allows the performance in solvent retention of the solid electrolyte composition 1000 to be further improved. With such a solid electrolyte composition 1000, furthermore, a thinner solid electrolyte sheet can be easily manufactured by the wet-on-dry technique. With this solid electrolyte sheet, the energy density of a battery can be further improved.

In Embodiment 1, $0.45 < S_\beta/S_\alpha < 0.70$ may be satisfied for the ratio $S_\beta/S_\alpha$. This allows the performance in solvent retention of the solid electrolyte composition 1000 to be further improved. With such a solid electrolyte composition 1000, furthermore, a thinner solid electrolyte sheet can be easily manufactured by the wet-on-dry technique. With this solid electrolyte sheet, the energy density of a battery can be further improved.

The specific surface area $S_\alpha$ of the solid electrolyte 101 represents, for example, the specific surface area of a group of particles of the solid electrolyte 101. The specific surface area $S_\alpha$ can be measured by, for example, the following BET (Brunauer-Emmett-Teller) multipoint method. First, the amount of nitrogen adsorbed on the solid electrolyte 101 is measured by nitrogen gas adsorption using a commercially available gas adsorption analyzer. For the amount of adsorbed nitrogen, multiple randomly chosen points (e.g., ten points) are measured at a relative pressure greater than or equal to 0.05 and less than or equal to 0.30. Then, based on the data obtained, the specific surface area $S_\alpha$ (unit: $m^2/g$) can be calculated by BET (Brunauer-Emmett-Teller) analysis. It should be noted that if the group of particles of the solid electrolyte 101 is not milled, sintered, or otherwise manipulated in the course of production of the solid electrolyte composition 1000, the specific surface area of the solid electrolyte 101 does not greatly change between before and after the production of the solid electrolyte composition 1000. In that case, a measured specific surface area of a group of particles of the solid electrolyte 101 used as a raw material for producing the solid electrolyte composition 1000 can be deemed as the specific surface area $S_\alpha$. Alternatively, the specific surface area $S_\alpha$ can be obtained by sampling the ion conductor 111 contained in a solid electrolyte sheet 201, acquiring a group of particles of the solid electrolyte 101 by washing the ion conductor 111 using a solvent in which the solid electrolyte 101 that constitutes this ion conductor 111 is insoluble and in which the other constituent materials, such as the binder 103, dissolve, and measuring their specific surface area. The sampling of the ion conductor 111 is performed by, for example, scraping off part of the solid electrolyte sheet. If a styrenic elastomer, for example, is used as the binder 103, furthermore, examples of solvents that can be used for such washing include aromatic hydrocarbon solvents, more specifically toluene.

The specific surface area $S_\beta$ of the ion conductor 111 represents, for example, the specific surface area of a group of particles of the ion conductor 111. The specific surface area $S_\beta$ can be measured by, for example, the same method as the specific surface area $S_\alpha$ except that a group of particles of the ion conductor 111 is used as the sample for measurement. The group of particles of the ion conductor 111 can be obtained by, for example, drying the solid electrolyte composition 1000, sufficiently loosening the resulting dry substance by hand, or without using a grinder or similar mechanical device, and further performing drying treatment. Alternatively, the specific surface area $S_\beta$ can be obtained by sampling the ion conductor 111 contained in a solid electrolyte sheet 201 and measuring its specific surface area.

The performance in solvent retention of the solid electrolyte composition 1000 can be evaluated based on the percentage solvent retention when a drop of the solid electrolyte composition 1000 is placed on an electrode. Fig. 2 is a diagram for describing a method for identifying the percentage solvent retention of the solid electrolyte composition 1000. The percentage solvent retention can be identified by the following method. First, under 25°C conditions, a droplet having a diameter greater than or equal to 3 mm and less than or equal to 5 mm formed by the solid electrolyte composition 1000 is placed on an electrode. The electrode can be, for example, a negative electrode formed by applying a mixture containing graphite and a sulfide solid electrolyte onto a piece of metal foil. After the placement of the droplet, the solid electrolyte composition 1000 and the solvent 102 leaching out of the solid electrolyte composition 1000 wet and spread on the electrode. Fig. 2 is an image of a solid electrolyte composition 1000 and a solvent 102 that have spread out observed in plan view. As shown in Fig. 2, the solvent 102 spreads out in such a manner as to surround the solid electrolyte composition 1000. At 3 minutes after the placement of the droplet, the area $S_1$ ($mm^2$) of the solvent 102 that has spread out and the area $S_2$ ($mm^2$) of the solid electrolyte composition 1000 are measured. In Fig. 2, the area $S_1$ corresponds to the area of a circle having a diameter $R_1$. The area $S_2$ corresponds to the area of a circle having a diameter $R_2$. The percentage solvent retention of the solid electrolyte composition 1000 can be calculated according to the equation below based on the areas $S_1$ and $S_2$.

Percentage solvent retention

$$(\%) = 100 \times S_2/S_1$$

It should be noted that the percentage solvent retention measured by this method is a value that can vary, for example with the composition of the electrode used, the condition of the surface of the electrode, and the porosity of the electrode. When the performance in solvent retention of solid electrolyte compositions 1000 is evaluated, therefore, it is needed to use the same type of electrode and make relative evaluations.

A "solid electrolyte sheet" may be a solid electrolyte layer supported by an electrode.

The solid electrolyte composition 1000 can be a slurry having flowability. When the solid electrolyte composition 1000 has flowability, a solid electrolyte sheet can be formed by a wet process, such as application.

In the following, the solid electrolyte composition 1000 according to Embodiment 1 will be described in detail.

[Solid Electrolyte Composition]

The solid electrolyte composition 1000 in Embodiment 1 contains an ion conductor 111 and a solvent 102. The ion conductor 111 includes a solid electrolyte 101 and a binder 103. In the following, the ion conductor 111, the solid electrolyte 101, the solvent 102, and the binder 103 will be described in detail.

\<Solid Electrolyte\>

The solid electrolyte 101 in Embodiment 1 can be, for example, a sulfide solid electrolyte, oxide solid electrolyte, halide solid electrolyte, polymeric solid electrolyte, or complex hydride solid electrolyte. The solid electrolyte 101 may include a sulfide solid electrolyte.

In the present disclosure, "oxide solid electrolyte" refers to a solid electrolyte containing oxygen. An oxide solid electrolyte may further contain anions of elements other than the sulfur and halogen elements as anions of elements other than oxygen.

In the present disclosure, "halide solid electrolyte" refers to a solid electrolyte containing a halogen element and containing no sulfur. In the present disclosure, solid electrolyte containing no sulfur refers to a solid electrolyte represented by a formula that does not include the element sulfur. Solid electrolytes containing a trace of a sulfur component, such as solid electrolytes in which sulfur constitutes less than or equal to 0.1% by mass, are included in solid electrolytes containing no sulfur. A halide solid electrolyte may further contain oxygen as an anion of an element other than halogen elements.

The sulfide solid electrolyte can be, for example, $Li_2S-P_2S_5$, $Li_2S-SiS_2$, $Li_2S-B_2S_3$, $Li_2S-GeS_2$, $Li_{3.25}Ge_{0.25}P_{0.75}S_4$, or $Li_{10}GeP_2S_{12}$. To these, compounds such as LiX, $Li_2O$, $MO_q$, and $Li_pMO_q$ may be added. The element X in "LiX" is at least one selected from the group consisting of F, Cl, Br, and I. The element M in "$MO_q$" and "$LipMO_q$" is at least one selected from the group consisting of P, Si, Ge, B, Al, Ga, In, Fe, and Zn. Each of p and q in "$MO_q$" and "$Li_pMO_q$" is independently a natural number.

The sulfide solid electrolyte may be, for example, a $Li_2S-P_2S_5$ glass-ceramic. To a $Li_2S-P_2S_5$ glass-ceramic, compounds such as LiX, $Li_2O$, $MO_q$, and $LipMO_q$ may be added, and two or more selected from LiCl, LiBr, and LiI may be added. $Li_2S-P_2S_5$ glass-ceramics are relatively soft materials; with a solid electrolyte sheet containing a $Li_2S-P_2S_5$ glass-ceramic, therefore, a battery with higher durability can be manufactured.

The oxide solid electrolyte can be, for example, one of NASICON solid electrolytes, which are typified by $LiTi_2(PO_4)_3$ and its substituted derivatives, (LaLi)$TiO_3$-based perovskite solid electrolytes, LISICON solid electrolytes, which are typified by $Li_{14}ZnGe_4O_{16}$, $Li_4SiO_4$, $LiGeO_4$, and their substituted derivatives, garnet solid electrolytes, which are typified by $Li_7La_3Zr_2O_{12}$ and its substituted derivatives, $Li_3PO_4$ and its N-substituted derivatives, and glass and glass-ceramics based on a Li-B-O compound, such as $LiBO_2$ or $Li_3BO_3$, and to which $Li_2SO_4$ or $Li_2CO_3$, for example, has been added.

The halide solid electrolyte contains, for example, Li, M1, and X. M1 is at least one selected from the group consisting of metal elements other than Li and of metalloid elements. X is at least one selected from the group consisting of F, Cl, Br, and I. Halide solid electrolytes have high thermal stability and thus allow the safety of a battery to be improved. Halide solid electrolytes, furthermore, contain no sulfur and thus allow the production of hydrogen sulfide gas to be reduced.

In the present disclosure, the "metalloid elements" are B, Si, Ge, As, Sb, and Te.

In the present disclosure, the "metal elements" are all elements included in groups 1 to 12 of the periodic table excluding hydrogen and all elements included in groups 13 to 16 of the periodic table excluding B, Si, Ge, As, Sb, Te, C, N, P, O, S, and Se.

In the present disclosure, therefore, the "metalloid elements" and "metal elements" are a group of elements that can become cations when forming an inorganic compound with a halogen element.

For example, the halide solid electrolyte may be a material represented by formula (1) below.

$$Li_\alpha M1_\beta X_\gamma \qquad (1)$$

In formula (1) above, $\alpha$, $\beta$, and $\gamma$ are each independently a value greater than 0. $\gamma$ can be, for example, 4 or 6.

With this configuration, the ionic conductivity of the halide solid electrolyte improves, and thus the ionic conductivity of a solid electrolyte sheet formed from the solid electrolyte composition 1000 according to Embodiment 1 can improve. This solid electrolyte sheet, when used in a battery, allows the cycle characteristics of the battery to be further improved.

In formula (1) above, the element M1 may include Y (=yttrium). The halide solid electrolyte, therefore, may contain Y as a metal element.

A halide solid electrolyte containing Y may be represented by, for example, formula (2) below.

$$Li_a Me_b Y_c X_6 \qquad (2)$$

In formula (2), a, b, and c may satisfy $a + mb + 3c = 6$ and $c > 0$. The element Me is at least one selected from the group consisting of metal elements other than Li and Y and of metalloid elements. m represents the valence of the element Me. It should be noted that when the element Me includes multiple elements, mb is the sum of the products of the proportion of each element and the valence of that element. For example, when Me includes elements Me1 and Me2, mb is represented by $m_1b_1+m_2b_2$, where $b_1$ is the proportion of the element Me1, $m_1$ is the valence of the element Me1, $b_2$ is the proportion of the element Me2, and $m_2$ is the valence of the element Me2. In formula (2) above, the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

The halide solid electrolyte can be, for example, one of the following materials. With the following materials, the ionic conductivity of the solid electrolyte 101 further improves, and thus the ionic conductivity of a solid electrolyte sheet formed from the solid electrolyte composition 1000 according to Embodiment 1 can improve. With this solid electrolyte sheet, the cycle characteristics of a battery can be further improved.

The halide solid electrolyte may be a material represented by formula (A1) below.

$$Li_{6-3d}Y_dX_6 \qquad (A1)$$

In formula (A1), the element X is at least one selected from the group consisting of Cl, Br, and I. In formula (A1), d satisfies $0 < d < 2$.

The halide solid electrolyte may be a material represented by formula (A2) below.

$$Li_3YX_6 \qquad (A2)$$

In formula (A2), the element X is at least one selected from the group consisting of Cl, Br, and I.

The halide solid electrolyte may be a material represented by formula (A3) below.

$$Li_{3-3\delta}Y_{1+\delta}Cl_6 \qquad (A3)$$

In formula (A3), $\delta$ satisfies $0 < \delta \le 0.15$.

The halide solid electrolyte may be a material represented by formula (A4) below.

$$Li_{3-3\delta}Y_{1+\delta}Br_6 \qquad (A4)$$

In formula (A4), $\delta$ satisfies $0 < \delta \le 0.25$.

The halide solid electrolyte may be a material represented by formula (A5) below.

$$L1_{3-3\delta+a}Y_{1+\delta-a}Me_aCl_{6-x-y}Br_xI_y \qquad (A5)$$

In formula (A5), the element Me is at least one selected from the group consisting of Mg, Ca, Sr, Ba, and Zn.

In formula (A5) above, furthermore,

$$-1 < \delta < 2,$$

$$0 < a < 3,$$

$$0 < (3-3\delta+a),$$

$$0 < (1+\delta-a),$$

$$0 \le x \le 6,$$

$$0 \le y \le 6,$$

and

$$(x+y) \leq 6$$

are satisfied.

The halide solid electrolyte may be a material represented by formula (A6) below.

$$Li_{3-3\delta}Y_{1+\delta-a}Me_aCl_{6-x-y}Br_xI_y \qquad (A6)$$

In formula (A6), the element Me is at least one selected from the group consisting of Al, Sc, Ga, and Bi.

In formula (A6) above, furthermore,

$$-1 < \delta < 1,$$

$$0 < a < 2,$$

$$0 < (1+\delta-a),$$

$$0 \leq x \leq 6,$$

$$0 \leq y \leq 6,$$

and

$$(x+y) \leq 6$$

are satisfied.

The halide solid electrolyte may be a material represented by formula (A7) below.

$$Li_{3-3\delta-a}Y_{1+\delta-a}Me_aCl_{6-x-y}Br_xI_y \qquad (A7)$$

In formula (A7) above, the element Me is at least one selected from the group consisting of Zr, Hf, and Ti.

In formula (A7) above, furthermore,

$$-1 < \delta < 1,$$

$$0 < a < 1.5,$$

$$0 < (3-3\delta-a),$$

$$0 < (1+\delta-a),$$

$$0 \leq x \leq 6,$$

$$0 \leq y \leq 6,$$

and

$$(x+y) \leq 6$$

are satisfied.

The halide solid electrolyte may be a material represented by formula (A8) below.

$$Li_{3-3\delta-2a}Y_{1+\delta-a}Me_aCl_{6-x-y}Br_xI_y \qquad (A8)$$

In formula (A8), the element Me is at least one selected from the group consisting of Ta and Nb.

In formula (A8) above, furthermore,

$$-1 < \delta < 1,$$

$$0 < a < 1.2,$$

$$0 < (3-3\delta-2a),$$

$$0 < (1+\delta-a),$$

$$0 \leq x \leq 6,$$

$$0 \leq y \leq 6,$$

and

$$(x+y) \leq 6$$

are satisfied.

The halide solid electrolyte may be a compound containing Li, M2, O (oxygen), and X2. The element M2 includes, for example, at least one selected from the group consisting of Nb and Ta. X2 is at least one selected from the group consisting of F, Cl, Br, and I.

The compound containing Li, M2, X2, and O (oxygen) may be represented by, for example, the following formula: $Li_xM2O_yX2_{5+x-2y}$. x may satisfy $0.1 < x < 7.0$. y may satisfy $0.4 < y < 1.9$.

More specifically, the halide solid electrolyte can be, for example, $Li_3Y(Cl,Br,I)_6$, $Li_{2.7}Y_{1.1}(Cl,Br,I)_6$, $Li_2Mg(F,Cl,Br,I)_4$, $Li_2Fe(F,Cl,Br,I)_4$, $Li(Al,Ga,In)(F,Cl,Br,I)_4$, $Li_3(Al,Ga,In)(F,Cl,Br,I)_6$, $Li_3(Ca,Y,Gd)(Cl,Br,I)_6$, $Li_{2.7}(Ti,Al)F_6$, $Li_{2.5}(Ti,Al)F_6$, or $Li(Ta,Nb)O(F,Cl)_4$. It should be noted that when an element in a formula is expressed like "(Al,Ga,In)" in the present disclosure, this notation represents at least one element selected from the group of elements in the parentheses. That is, "(Al,Ga,In)" is synonymous with "at least one selected from the group consisting of Al, Ga, and In." The same applies when other elements are listed.

The polymeric solid electrolyte can be, for example, a compound of a polymeric compound and a lithium salt. The polymeric compound may have an ethylene oxide structure. Polymeric compounds having an ethylene oxide structure can accommodate a large amount of lithium salt. Such polymeric compounds, therefore, allow ionic conductivity to be further improved. The lithium salt can be, for example, $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, or $LiC(SO_2CF_3)_3$. One lithium salt may be used alone, or two or more may be used in combination.

The complex hydride solid electrolyte can be, for example, $LiBH_4$-LiI or $LiBH_4$-$P_2S_5$.

The shape of the solid electrolyte 101 is not particularly limited and may be, for example, needle-like, spherical, or ellipsoidal. The shape of the solid electrolyte 101 may be particulate.

When the shape of the solid electrolyte 101 is particulate (e.g., spherical), the median diameter of this solid electrolyte 101 may be greater than or equal to 1 $\mu$m and less than or equal to 100 $\mu$m, or may be greater than or equal to 1 $\mu$m and less than or equal to 10 $\mu$m. When the median diameter of the solid electrolyte 101 is greater than or equal

to 1 μm and less than or equal to 100 μm, the solid electrolyte 101 can easily disperse in the solvent 102.

When the shape of the solid electrolyte 101 is particulate (e.g., spherical), the median diameter of this solid electrolyte 101 may be greater than or equal to 0.1 μm and less than or equal to 5 μm, or may be greater than or equal to 0.5 μm and less than or equal to 3 μm. When the median diameter of the solid electrolyte 101 is greater than or equal to 0.1 μm and less than or equal to 5 μm, a solid electrolyte sheet manufactured from the solid electrolyte composition 1000 has higher surface smoothness and can have a denser structure.

Median diameter refers to the particle diameter in a volume-based particle size distribution at which the cumulative volume is equal to 50%. The volume-based particle size distribution is determined by laser diffraction. The same applies to the other materials, which will be described later.

The specific surface area $S_\alpha$ of the solid electrolyte 101 may be greater than or equal to 0.1 m$^2$/g and less than or equal to 100 m$^2$/g, or may be greater than or equal to 1 m$^2$/g and less than or equal to 10 m$^2$/g. When the specific surface area $S_\alpha$ of the solid electrolyte 101 is greater than or equal to 0.1 m$^2$/g and less than or equal to 100 m$^2$/g, the solid electrolyte 101 can easily disperse in the solvent 102. The specific surface area $S_\alpha$ can be measured by the method described above.

The ionic conductivity of the solid electrolyte 101 may be greater than or equal to 0.01 mS/cm$^2$, may be greater than or equal to 0.1 mS/cm$^2$, or may be greater than or equal to 1 mS/cm$^2$. When the ionic conductivity of the solid electrolyte 101 is greater than or equal to 0.01 mS/cm$^2$, the power characteristics of a battery can be improved.

<Binder>

The binder 103 is able to improve the dispersibility of the solid electrolyte 101 in the solvent 102 and adhesion between particles of the solid electrolyte 101. Examples of binders 103 include polyvinylidene fluoride (PVDF), polytetrafluoroethylene (PTFE), polyethylene, polypropylene, aramid resins, polyamides, polyimides, polyamide-imides, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyethers, polycarbonates, polyethersulfones, polyetherketones, polyetheretherketones, polyphenylene sulfide, hexafluoropolypropylene, styrene butadiene rubber, carboxymethyl cellulose, and ethyl cellulose. The binder 103 can alternatively be a copolymer synthesized using two or more monomers selected from the group consisting of tetrafluoroethylene, hexafluoroethylene, hexafluoropropylene, perfluoroalkyl vinyl ethers, vinylidene fluoride, chlorotrifluoroethylene, ethylene, propylene, butadiene, styrene, pentafluoropropylene, fluoromethyl vinyl ether, acrylates, acrylic acid, and hexadiene. One of these may be used alone, or two or more may be used in combination.

The binder 103 may include an elastomer for excellent binding properties. Elastomer refers to a polymer having rubber elasticity. The elastomer used as a binder 103 may be a thermoplastic elastomer or may be a thermosetting elastomer. Examples of elastomers include styrene-ethylene-butylene-styrene block copolymers (SEBS), styrene-ethylene-propylene-styrene block copolymers (SEPS), styrene-ethylene-ethylene-propylene-styrene block copolymers (SEEPS), butadiene rubber (BR), isoprene rubber (IR), chloroprene rubber (CR), acrylonitrile-butadiene rubber (NBR), styrene-butylene rubber (SBR), styrene-butadiene-styrene block copolymers (SBS), styrene-isoprene-styrene block copolymers (SIS), hydrogenated isoprene rubber (HIR), hydrogenated butyl rubber (HIIR), hydrogenated nitrile rubber (HNBR), hydrogenated styrene-butylene rubber (HSBR), and acrylate butadiene rubber (ABR). A mixture containing two or more selected from these may be used as the binder 103. When the binder 103 includes an elastomer, a solid electrolyte sheet manufactured from the solid electrolyte composition 1000 tends to exhibit excellent flexibility and elasticity. In that case, the durability of the battery tends to improve.

The elastomer included in the binder 103 may include a repeating unit derived from styrene. Repeating unit refers to a molecular structure derived from a monomer, and a repeating unit may also be referred to as a constitutional unit. In the present disclosure, an elastomer including a repeating unit derived from styrene may be referred to as a styrenic elastomer. Styrenic elastomers are better in flexibility and elasticity and thus are suitable for use as binders in a solid electrolyte sheet. The percentage of the repeating unit derived from styrene in the styrenic elastomer is not particularly limited. For example, the percentage is greater than or equal to 10% by mass and less than or equal to 70% by mass.

Examples of styrenic elastomers include styrene-ethylene-butylene-styrene block copolymers (SEBS), styrene-ethylene-propylene-styrene block copolymers (SEPS), styrene-ethylene-ethylene-propylene-styrene block copolymers (SEEPS), styrene-butylene rubber (SBR), styrene-butadiene-styrene block copolymers (SBS), styrene-isoprene-styrene block copolymers (SIS), and hydrogenated styrene-butylene rubber (HSBR). The binder 103 may include SBR or SEBS as a styrenic elastomer. A mixture containing two or more selected from these may be used as the binder 103. Because styrenic elastomers are flexible, with a binder 103 including a styrenic elastomer, flexibility can be imparted to a solid electrolyte sheet manufactured from the solid electrolyte composition 1000. As a result, the thinning of an electrolyte layer in a battery made with a solid electrolyte sheet can be achieved, and the energy density of the battery can be further improved.

A polymer included in the binder 103 may include a modifying group. Modifying group refers to a functional group that chemically modifies all repeating units included in the polymer chain, a subset of the repeating units included in the polymer chain, or a terminal portion of the polymer chain. The modifying group can be introduced into the polymer chain through, for example, substitution reaction or addition reaction. The modifying group includes, for example, elements such as O and N, which have relatively high electronegativity, and Si, which has relatively low electronegativity. With a modifying group including such an element, polarity can be imparted to the polymer. Examples of modifying groups include a carboxylic acid group, an acid anhydride group, an acyl group, a hydroxy group, a sulfo group, a sulfanyl group, a phosphoric acid group, a phosphonic acid group, an isocyanate group, an epoxy group, a silyl group, an amino group, a nitrile group, and a nitro group. A specific example of an acid anhydride group is a maleic anhydride group. When a polymer in the binder 103 includes a modifying group, the dispersibility of the solid electrolyte 101 contained in the solid electrolyte composition 1000 can further improve. The binder 103 may include an SBR into which a modifying group has been introduced.

The weight-average molecular weight ($M_w$) of a polymer included in the binder 103 in Embodiment 1 may be, for example, greater than or equal to 1,000 and less than or equal to 1,000,000, or may be greater than or equal to 10,000 and less than or equal to 500,000. When the weight-average molecular weight of the polymer included in the binder 103 is greater than or equal to 1,000, particles of the solid electrolyte 101 are able to adhere to one another with sufficient bonding strength. When the weight-average molecular weight of the polymer included in the binder 103 is less than or equal to 1,000,000, it is unlikely that ion conduction between particles of the solid electrolyte 101 is inhibited by the binder 103, and the charge-discharge characteristics of a battery can be improved. The weight-average molecular weight of a polymer included in the binder 103 can be identified through, for example, a gel permeation chromatography (GPC) measurement using polystyrene as the standard. In other words, the weight-average molecular weight is a value calculated in relation to polystyrene. In the GPC measurement, chloroform may be used as the eluent.

<Ion Conductor>

As mentioned above, the ion conductor 111 includes a solid electrolyte 101 and a binder 103. The ion conductor 111 includes multiple particles of the solid electrolyte 101 bound together by the binder 103.

For the ion conductor 111, the percentage of the mass of the binder 103 to the mass of the solid electrolyte 101 is, for example, greater than or equal to 1% by mass, may be greater than or equal to 2% by mass, may be greater than or equal to 3% by mass, may be greater than or equal to 5% by mass, or may be greater than or equal to 8% by mass. The upper limit of the percentage of the mass of the binder 103 to the mass of the solid electrolyte 101 is, for example, 10% by mass.

The shape of the ion conductor 111 is not particularly limited and may be, for example, needle-like, spherical, or ellipsoidal. The shape of the ion conductor 111 may be particulate.

When the shape of the ion conductor 111 is particulate (e.g., spherical), the median diameter of the ion conductor 111 may be greater than or equal to 0.1 $\mu$m and less than or equal to 10 $\mu$m, or may be greater than or equal to 0.5 $\mu$m and less than or equal to 3 $\mu$m.

The specific surface area $S_\beta$ of the ion conductor 111 may be greater than or equal to 0.04 m$^2$/g and less than or equal to 80 m$^2$/g, may be greater than or equal to 1 m$^2$/g and less than or equal to 15 m$^2$/g, may be greater than or equal to 1.5 m$^2$/g and less than or equal to 5 m$^2$/g, or may be greater than or equal to 2.0 m$^2$/g and less than or equal to 4.0 m$^2$/g. The specific surface area $S_\beta$ can be measured by the method described above.

The ionic conductivity of the ion conductor 111 may be greater than or equal to 0.01 mS/cm$^2$, may be greater than or equal to 0.1 mS/cm$^2$, or may be greater than or equal to 1 mS/cm$^2$.

The ion conductor 111 in the solid electrolyte composition 1000 tends to exhibit a reduced loss of ionic conductivity. The loss of ionic conductivity in the ion conductor 111 can be evaluated based on, for example, the percentage of the ionic conductivity of the ion conductor 111 to the ionic conductivity of the solid electrolyte 101. In the present disclosure, this percentage may be referred to as the percentage maintenance of ionic conductivity. The percentage maintenance of ionic conductivity is, for example, greater than or equal to 30%, may be greater than or equal to 40%, may be greater than or equal to 50%, may be greater than or equal to 60%, or may be greater than or equal to 70%. The upper limit of the percentage maintenance of ionic conductivity is not limited to a particular value. For example, the upper limit is 95%.

The ion conductor 111 can be produced by, for example, mixing the solid electrolyte 101 and the binder 103 together. The method for mixing them together is not particularly limited, and an example is the method of mechanically milling and mixing together the solid electrolyte 101 and the binder 103 in their dry state. The wet process, in which the solid electrolyte 101 is dispersed in a solution or dispersion containing the binder 103 to mix them together, may alternatively be used. With the wet process, the binder 103 can be mixed with the solid electrolyte 101 conveniently and uniformly. It is also allowed to produce the solid electrolyte composition 1000 by producing the ion conductor 111 in a solvent by the wet process.

<Solvent>

The solvent 102 may be an organic solvent. An organic solvent is a compound containing carbon. For example, an organic solvent is a compound that contains elements such as carbon, hydrogen, nitrogen, oxygen, sulfur, and halogens.

The solvent 102 may include at least one selected from the group consisting of a hydrocarbon, a compound having a halogen group, and a compound having an ether linkage.

A hydrocarbon is a compound consisting solely of carbon and hydrogen. The hydrocarbon may be an aliphatic hydrocarbon. The hydrocarbon may be a saturated hydrocarbon or may be an unsaturated hydrocarbon. The hydrocarbon may be linear-chain or may be branched-chain. The number of carbon atoms included in the hydrocarbon is not particularly limited and may be greater than or equal to 7. By using a hydrocarbon, a solid electrolyte composition 1000 superior in the dispersibility of the ion conductor 111 can be obtained. The loss of the ionic conductivity of the solid electrolyte 101 caused by mixing with the solvent 102, furthermore, can be reduced.

The hydrocarbon may have a ring structure. The ring structure may be an alicyclic hydrocarbon or may be an aromatic hydrocarbon. The ring structure may be monocyclic or may be polycyclic. When a ring structure is present in the hydrocarbon, the ion conductor 111 can easily disperse in the solvent 102. The hydrocarbon may include an aromatic hydrocarbon in order that the dispersibility of the ion conductor 111 in the solid electrolyte composition 1000 will be increased. That is, the solvent 102 may include an aromatic hydrocarbon. The hydrocarbon may be an aromatic hydrocarbon. Styrenic elastomers have high solubility in aromatic hydrocarbons. When the binder 103 includes a styrenic elastomer and when the solvent 102 includes an aromatic hydrocarbon, therefore, the binder 103 can be adsorbed onto the solid electrolyte 101 more efficiently in the solid electrolyte composition 1000. Through this, the performance in solvent retention of the solid electrolyte composition 1000 can be further improved.

For the compound having a halogen group, its portion other than the halogen group may be composed solely of carbon and hydrogen. That is, compound having a halogen group refers to a compound in which at least one of the hydrogen atoms included in a hydrocarbon has been replaced with a halogen group. Examples of halogen groups include F, Cl, Br, and I. At least one selected from the group consisting of F, Cl, Br, and I may be used as the halogen group. A compound having a halogen group can have high polarity. By using a compound having a halogen group in the solvent 102, the ion conductor 111 is allowed to easily disperse in the solvent 102, and thus a solid electrolyte composition 1000 superior in dispersibility can be obtained. As a result, a solid electrolyte sheet manufactured from the solid electrolyte composition 1000 has excellent ionic conductivity and can have a denser structure at the same time.

The number of carbon atoms included in the compound having a halogen group is not particularly limited and may be greater than or equal to 7. This makes the compound having a halogen group scarcely volatile, thus allowing the solid electrolyte composition 1000 to be manufactured in a stable manner. A compound having a halogen group can have a large molecular weight. That is, a compound having a halogen group can have a high boiling point.

The compound having a halogen group may have a ring structure. The ring structure may be an alicyclic hydrocarbon or may be an aromatic hydrocarbon. The ring structure may be monocyclic or may be polycyclic. When a ring structure is present in the compound having a halogen group, the ion conductor 111 can easily disperse in the solvent 102. The compound having a halogen group may include an aromatic hydrocarbon in order that the dispersibility of the ion conductor 111 in the solid electrolyte composition 1000 will be increased. The compound having a halogen group may be an aromatic hydrocarbon.

The compound having a halogen group may have the halogen group as its only functional group. In that case, the number of halogen atoms included in the compound having a halogen group is not particularly limited. At least one selected from the group consisting of F, Cl, Br, and I may be used as the halogen group. By using such a compound in the solvent 102, the ion conductor 111 is allowed to easily disperse in the solvent 102, and thus a solid electrolyte composition 1000 superior in dispersibility can be obtained. As a result, a solid electrolyte sheet manufactured from the solid electrolyte composition 1000 has excellent ionic conductivity and can have a denser structure at the same time. By using such a compound in the solvent 102, a solid electrolyte sheet manufactured from the solid electrolyte composition 1000 is allowed to easily have a dense structure with few defects such as pinholes and irregularities.

The compound having a halogen group may be a halogenated hydrocarbon. Halogenated hydrocarbon refers to a compound in which all hydrogen atoms included in a hydrocarbon have been replaced with halogen groups. By using a halogenated hydrocarbon in the solvent 102, the ion conductor 111 is allowed to easily disperse in the solvent 102, and thus a solid electrolyte composition 1000 superior in dispersibility can be obtained. As a result, a solid electrolyte sheet manufactured from the solid electrolyte composition 1000 has excellent ionic conductivity and can have a denser structure at the same time. By using such a compound in the solvent 102, a solid electrolyte sheet manufactured from the solid electrolyte composition 1000 is allowed to easily have a dense structure with few defects such as pinholes and irregularities.

For the compound having an ether linkage, its portion other than the ether linkage may be composed solely of carbon and hydrogen. That is, compound having an ether linkage refers to a compound in which at least one of the C-C bonds included in a hydrocarbon has been replaced with a C-O-C linkage. A compound having an ether linkage can have high polarity. By using a compound having an ether linkage in the solvent 102, the ion conductor 111 is allowed to easily disperse in the solvent 102. Thus, a solid electrolyte composition 1000 superior in dispersibility can be obtained. As a result, a solid electrolyte sheet manufactured from the solid electrolyte composition 1000 has excellent ionic conductivity and can have a denser structure at the same time.

The compound having an ether linkage may have a ring structure. The ring structure may be an alicyclic hydrocarbon or may be an aromatic hydrocarbon. The ring structure may be monocyclic or may be polycyclic. When a ring structure is present in the compound having an ether linkage, the ion conductor 111 can easily disperse in the solvent 102. The compound having an ether linkage may include an aromatic hydrocarbon in order that the dispersibility of the ion conductor 111 in the solid electrolyte composition will be increased. The compound having an ether linkage may be an aromatic hydrocarbon.

Examples of solvents 102 include ethyl benzene, mesitylene, pseudocumene, p-xylene, cumene, tetralin, m-xylene, dibutyl ether, 1,2,4-trichlorobenzene, chlorobenzene, 2,4-dichlorotoluene, anisole, o-chlorotoluene, m-dichlorobenzene, p-chlorotoluene, o-dichlorobenzene, 1,4-dichlorobutane, and 3,4-dichlorotoluene. One of these may be used alone, or two or more may be used in combination.

For cost reasons, commercially available xylene (mixed xylenes) may be used as the solvent 102. For example, mixed xylenes in which o-xylene, m-xylene, p-xylene, and ethylbenzene are mixed in a ratio by mass of 24:42:18:16 may be used.

The solvent 102 may include tetralin. Tetralin has a relatively high boiling point. With tetralin, not only is the performance in solvent retention of the solid electrolyte composition 1000 improved, but also the solid electrolyte composition 1000 can be manufactured in a stable manner through a kneading process.

The boiling point of the solvent 102 may be higher than or equal to 100°C and lower than or equal to 250°C. The solvent 102 may be liquid at room temperature (25°C). Such a solvent does not easily volatilize at room temperature and thus allows the solid electrolyte composition 1000 to be manufactured in a stable manner. Thus, a solid electrolyte composition 1000 that can be easily applied to a surface of an electrode or substrate is obtained. The solvent 102 contained in the solid electrolyte composition 1000 can be easily removed by drying as described below.

The water content of the solvent 102 may be less than or equal to 10 ppm by mass. By reducing the water content, the loss of the ionic conductivity of the solid electrolyte 101 caused by its reaction can be reduced. Examples of methods for reducing the water content include dehydration methods using a molecular sieve and dehydration methods by bubbling using an inert gas, such as nitrogen or argon gas. Dehydration methods by bubbling using an inert gas are recommended because they allow deoxidation to be achieved simultaneously with water. The water content can be measured with a Karl Fischer moisture analyzer.

The solvent 102 can be a liquid that can disperse the solid electrolyte 101. The solid electrolyte 101 does not need to be dissolved in the solvent 102. When the solid electrolyte 101 does not dissolve in the solvent 102, a solid electrolyte composition 1000 can be produced in which an ion-conducting phase formed during the manufacture of the solid electrolyte 101 is kept. Thus, a solid electrolyte sheet manufactured using this solid electrolyte composition 1000 can reduce a loss of ionic conductivity.

The solvent 102 may partially or completely dissolve the solid electrolyte 101. By dissolving the solid electrolyte 101, the density of a solid electrolyte sheet manufactured using this solid electrolyte composition 1000 can be improved.

<Dispersant>

The solid electrolyte composition 1000 may contain a dispersant. The dispersant may be a low-molecular-weight dispersant or may be a polymeric dispersant. A commercially available dispersant, humectant, or surfactant, for example, may be used as the dispersant. Dispersants are able to lessen interactions between particles of the solid electrolyte 101. With a dispersant, therefore, the binder 103 can be adsorbed onto the solid electrolyte 101 more efficiently. Through this, the performance in solvent retention of the solid electrolyte composition 1000 can be further improved.

For the solid electrolyte composition 1000, the dispersant may include an amine compound. Amine compounds are suitable for improving the dispersibility of the solid electrolyte 101. Amine compounds are suitable for use as dispersants in the solid electrolyte composition 1000. Examples of amine compounds include aliphatic amines, such as methylamine and dimethylamine, aromatic amines, such as aniline, and heterocyclic amines, such as imidazole and imidazoline.

For the solid electrolyte composition 1000, the dispersant may include imidazoline or an imidazoline derivative. Imidazoline or an imidazoline derivative is more suitable for improving the dispersibility of the solid electrolyte 101. Imidazoline or an imidazoline derivative is more suitable for use as a dispersant in the solid electrolyte composition 1000. An example of an imidazoline derivative is a 1-hydroxyethyl-2-alkenylimidazoline.

For the solid electrolyte composition 1000, the percentage of the mass of the dispersant to the mass of the solid electrolyte 101 is not particularly limited. For example, the percentage is greater than or equal to 0.001% by mass and less than or equal to 10% by mass, and may be greater than or equal to 0.01% by mass and less than or equal to 1.0% by mass. When the percentage of the mass of the dispersant is greater than or equal to 0.001% by mass, the dispersibility of the solid electrolyte 101 can be improved in the solid electrolyte composition 1000. When the percentage of the mass of the dispersant is less than or equal to 10% by mass, the loss of the ionic conductivity of the solid electrolyte 101 can be reduced.

<Solid Electrolyte Composition>

The solid electrolyte composition 1000 may be in paste form or may be in the form of a dispersion. The ion conductor 111 is, for example, particles. The solid electrolyte composition 1000 includes particles of the ion conductor 111 mixed with the solvent 102. In the manufacture of the solid electrolyte composition 1000, the method for mixing together the ion conductor 111 and the solvent 102 or the method for mixing together the solid electrolyte 101, the solvent 102, and the binder 103 is not particularly limited. Examples include mixing methods using a stirring, shaking, ultrasonic, rotary, or other mixing device. Examples include mixing methods using a high-speed homogenizer, thin-film spinning high-speed mixer, ultrasonic homogenizer, ball mill, bead mill, planetary mixer, sand mill, roll mill, kneader, or other dispersing and kneading device. One of these mixing methods may be used alone, or two or more may be used in combination.

The solid electrolyte composition 1000 is manufactured by, for example, the following method. First, the solid electrolyte 101 and the solvent 102 are mixed together, and a binder solution and a dispersant solution, for example, are added. The resulting liquid mixture is subjected to high-speed shear treatment using an in-line disperser-mill. Through such a process, the ion conductor 111 is formed, the ion conductor 111 is dispersed and stabilized in the solvent 102 at the same time, and a solid electrolyte composition 1000 better in flowability can be manufactured. In order that a solid electrolyte composition 1000 superior in flowability will be manufactured, the high-speed shear treatment may be performed under peripheral velocity conditions under which the breakage of solid electrolyte 101 particles does not occur and under which disintegration between solid electrolyte 101 particles occurs. When the breakage of solid electrolyte 101 particles does not occur, the specific surface area of the solid electrolyte 101 tends not to greatly change between before and after the production of the solid electrolyte composition 1000. Alternatively, the solid electrolyte composition 1000 may be produced by mixing together the solvent 102 and an ion conductor 111 that has been prepared beforehand and subjecting the resulting liquid mixture to high-speed shear treatment.

The binder solution is, for example, a solution containing the binder 103 and the solvent 102. The composition of the solvent contained in the binder solution may be the same as or may be different from the composition of the solvent included in the dispersion of the solid electrolyte 101. The dispersant solution is, for example, a solution containing a dispersant and the solvent 102. The composition of the solvent contained in the dispersant solution may be the same as or may be different from the composition of the solvent included in the dispersion of the solid electrolyte 101.

The solids concentration of the solid electrolyte composition 1000 is determined as appropriate according to the particle diameter of the solid electrolyte 101, the specific surface area of the solid electrolyte 101, the type of the solvent 102, and the type of the binder 103. The solids concentration may be greater than or equal to 20% by mass and less than or equal to 70% by mass, or may be greater than or equal to 30% by mass and less than or equal to 60% by mass. By setting the solids concentration greater than or equal to 20% by mass, the sagging of the solid electrolyte composition 1000 when it is applied to an electrode or other substrate can be reduced by increasing the viscosity of the solid electrolyte composition 1000. By setting the solids concentration less than or equal to 70% by mass, the wet film thickness of the solid electrolyte composition 1000 when it is applied to a substrate can be made relatively large, and thus a solid electrolyte sheet with a more uniform thickness can be manufactured.

(Embodiment 2)

Embodiment 2 will now be described. Descriptions that are the same as in Embodiment 1 will be omitted where appropriate.

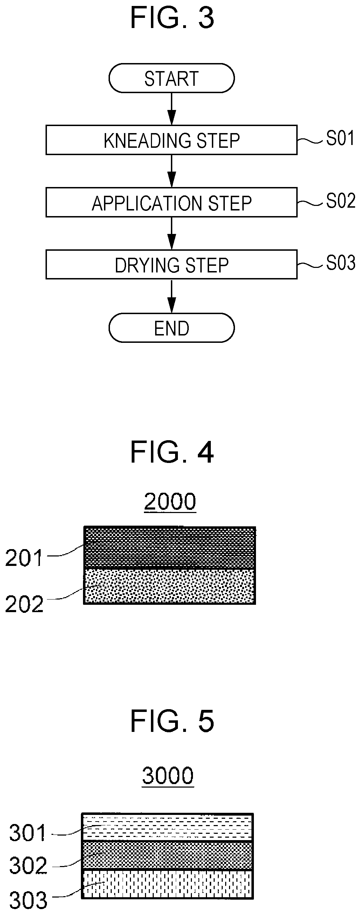

A method for manufacturing a multilayer body including a solid electrolyte sheet and an electrode will be described below with reference to Fig. 3. Fig. 3 is a flowchart illustrating a method for manufacturing a multilayer body according to Embodiment 2.

The method for manufacturing a multilayer body may include step S01, step S02, and step S03. Step S01 in Fig. 3 is a kneading step for producing a solid electrolyte composition 1000 and is described in Embodiment 1. The method for manufacturing a multilayer body includes step S02, in which a solid electrolyte composition 1000 in Embodiment 1 is applied, and step S03, in which the applied composition is dried. Steps S01, S02, and S03 may be performed in this order. Through these steps, a multilayer body 2000 having a good solid electrolyte sheet 201 with reduced formation of streaks can be manufactured using a solid electrolyte composition 1000 in Embodiment 1.

Fig. 4 is a cross-sectional diagram of a multilayer body 2000 according to Embodiment 2. By performing a step of applying a solid electrolyte composition 1000 onto an electrode 202 as step S02, a multilayer body 2000 can be manufactured. This multilayer body 2000 can also be used as an electrode.

In step S02, a solid electrolyte composition 1000 is applied onto an electrode 202. Through this, a coating of the solid electrolyte composition 1000 is formed on the electrode 202.

The electrode 202 may be a positive electrode or negative electrode or may be an element obtained by applying a solid electrolyte onto a positive electrode or negative electrode. The positive or negative electrode includes, for example, a current collector and an active material layer disposed on the current collector. By applying a solid electrolyte composition 1000 onto an electrode 202 and going through step S03 described below, a multilayer body 2000 of the electrode 202 and a solid electrolyte sheet 201 is manufactured.

Examples of application methods include die coating, gravure coating, doctor blading, bar coating, spray coating, and electrostatic coating. The application may be performed by die coating for the sake of productivity in mass production. The type of coating may be continuous coating or intermittent coating.

For the electrode 202, a pressing step may be performed before step S02 to an extent that the interfacial resistance between the active material layer and the current collector and the interfacial resistance between the active material layer and the solid electrolyte layer do not increase excessively. With a pressing step, the packing density of the electrode 202 can be increased. By increasing the packing density of the electrode 202, the penetration of solvent into the electrode 202 in step S02 can be further reduced, and, through this, a more uniform solid electrolyte sheet 201 can be produced.

For the electrode 202, it is not needed to perform a pressing step before step S02. By omitting pressing, the interfacial resistance between the active material layer and the solid electrolyte layer can be further reduced, and the power characteristics of a battery can be improved.

In step S02, the wet film thickness is not particularly limited. For example, the wet film thickness is less than or equal to 100 $\mu$m, may be less than or equal to 80 $\mu$m, may be less than or equal to 60 $\mu$m, may be less than or equal to 50 $\mu$m, or may be less than or equal to 40 $\mu$m. The lower limit of the wet film thickness is not particularly limited. For example, the lower limit is 1 $\mu$m .

In step S03, the solid electrolyte composition 1000 applied onto the electrode 202 is dried. Through the solid electrolyte composition 1000 being dried, the solvent 102 is, for example, removed from the coating of the solid electrolyte composition 1000, and a solid electrolyte sheet 201 is manufactured.

Examples of drying methods by which the solvent 102 is removed from the solid electrolyte composition 1000 include methods such as warm-air/hot-air drying, infrared heating drying, reduced pressure drying, vacuum drying, and radio-frequency induction heating drying. One of these may be used alone, or two or more may be used in combination.

The solvent 102 may be removed from the solid electrolyte composition 1000 by warm-air/hot-air drying for manufacturing cost reasons. The set temperature of the warm air/hot air may be higher than or equal to 50°C and lower than or equal to 250°C, or may be higher than or equal to 80°C and lower than or equal to 150°C.

The removal of the solvent 102 can be confirmed by, for example, Fourier-transform infrared spectroscopy (FT-IR), x-ray photoelectron spectroscopy (XPS), gas chromatography (GC), or gas chromatography/mass spectrometry (GC/MS). It should be noted that as long as the dried solid electrolyte sheet 201 has ionic conductivity, the solvent 102 does not need to have been completely removed. That is, part of the solvent 102 may remain in the solid electrolyte sheet 201.

The ionic conductivity of the solid electrolyte sheet 201 may be greater than or equal to 0.1 mS/cm or may be greater than or equal to 1 mS/cm. Through the adjustment of the ionic conductivity to greater than or equal to 0.1 mS/cm, the power characteristics of the battery can improve. For the solid electrolyte sheet 201, pressure molding using, for example, a press machine may be performed for the purpose of improving ionic conductivity.

(Embodiment 3)

Embodiment 3 will now be described. Descriptions that are the same as in Embodiment 1 or 2 will be omitted where appropriate.

Fig. 5 is a cross-sectional diagram of a battery 3000 according to Embodiment 3.

A battery 3000 in Embodiment 3 includes a positive electrode 301, a negative electrode 303, and an electrolyte layer 302.

The electrolyte layer 302 is located between the positive electrode 301 and the negative electrode 303.

The electrolyte layer 302 includes a solid electrolyte sheet 201 produced in Embodiment 2.

The battery 3000 includes a good solid electrolyte sheet 201 with reduced formation of streaks. For a solid electrolyte sheet 201, being good with reduced formation of streaks means that reduced occurrence of defects has been achieved in the solid electrolyte sheet 201. Even when a thinner electrolyte layer 302 is used, therefore, the possibility of contact (short-circuiting) between the positive electrode 301 and the negative electrode 303 can be reduced, and the energy density of the battery 3000 can be improved.

The battery 3000 can be manufactured by, for example, combining a multilayer body 2000 in Embodiment 2 and an electrode having the polarity opposite the polarity of the electrode 202 included in the multilayer body 2000. This method is superior in terms of reducing the number of components involved compared with the transfer method, in which a solid electrolyte sheet 201 formed on a substrate is transferred to an electrode. In other words, this method is superior in productivity in mass production compared with the transfer method. When the electrode 202 is the positive electrode, the electrode having the polarity opposite the polarity of the electrode 202 is the negative electrode. When the electrode 202 is the negative electrode, the electrode having the polarity opposite the polarity of the electrode 202 is the positive electrode. The positive or negative electrode includes, for example, a current collector and an active material layer disposed on the current collector. There may be a layer containing a solid electrolyte on the active material layer of the positive electrode or on the active material layer of the negative electrode. Examples of methods for combining an electrode having the polarity opposite the polarity of the electrode 202 include the method of applying electrode slurry onto the solid electrolyte sheet 201 in the multilayer body 2000, and the method of producing the electrode beforehand by applying a mixture onto a current collector and drying the applied mixture and then allowing this electrode to bond with the multilayer body 2000.

A method for manufacturing the battery 3000 includes, for example, applying a solid electrolyte composition 1000 onto a first electrode to form a coating, removing solvent from the coating to produce a solid electrolyte sheet 201, and placing a second electrode on the solid electrolyte sheet 201. Examples of methods for placing a second electrode on the solid electrolyte sheet 201 include the method of applying a second electrode composition onto the solid electrolyte sheet 201, and the method of transferring the second electrode onto the solid electrolyte sheet 201. When the first electrode is the positive electrode, the second electrode is the negative electrode. When the first electrode is the negative electrode, the second electrode is the positive electrode. Each of the first and second electrodes includes, for example, a current collector and an active material layer disposed on the current collector. There may be a layer containing a solid electrolyte on the active material layer of the first electrode or on the active material layer of the second electrode.

The electrolyte layer 302 is a layer containing an electrolyte material. An example of an electrolyte material is a solid electrolyte. The electrolyte layer 302, therefore, may be a solid electrolyte layer. The solid electrolyte contained in the electrolyte layer 302 may be a solid electrolyte listed as an example of the solid electrolyte 101 in Embodiment 1. For example, a solid electrolyte such as a sulfide solid electrolyte, oxide solid electrolyte, halide solid electrolyte, polymeric solid electrolyte, or complex hydride solid electrolyte can be used.

The electrolyte layer 302 may contain a solid electrolyte as its main constituent. The electrolyte layer 302 may contain more than or equal to 70% solid electrolyte as a percentage by mass to the entire electrolyte layer 302 (more than or equal to 70% by mass solid electrolyte).

With this configuration, the power characteristics of the battery 3000 can be further improved.

The electrolyte layer 302 may contain a solid electrolyte as its main constituent and further contain inevitable impurities. Examples of inevitable impurities include starting materials used when synthesizing the solid electrolyte, by-products, and decomposition products.

The electrolyte layer 302 may contain 100% solid electrolyte as a percentage by mass to the entire electrolyte layer 302 excluding impurities that inevitably become mixed in.

With this configuration, the power characteristics of the battery 3000 can be further improved.

The electrolyte layer 302 may contain two or more of the materials named as solid electrolytes. For example, the electrolyte layer 302 may contain a halide solid electrolyte and a sulfide solid electrolyte.

The electrolyte layer 302 may be a layer produced by stacking a layer made with the solid electrolyte sheet 201 and a layer containing a solid electrolyte having a composition different from the composition of the solid electrolyte 101 contained in the solid electrolyte sheet 201. The electrolyte layer 302 may be a single layer that is the solid electrolyte sheet 201 or may be two or more layers formed by other solid electrolytes.

The electrolyte layer 302 may have a layer disposed between a layer made with the solid electrolyte sheet 201 and the negative electrode 303 and containing a solid electrolyte having a more negative reduction potential than the solid electrolyte 101 contained in the solid electrolyte sheet 201. With this configuration, the reductive decomposition of the solid electrolyte 101 that can result from contact between the solid electrolyte 101 and the negative electrode active material can be reduced, and thus the power characteristics of the battery 3000 can be improved. An example of a solid electrolyte having a more negative reduction potential than the solid electrolyte 101 is a sulfide solid electrolyte.

The thickness of the electrolyte layer 302 may be greater than or equal to 1 μm and less than or equal to 300 μm. When the thickness of the electrolyte layer 302 is greater than or equal to 1 μm, the possibility that the positive electrode 301 and the negative electrode 303 short-circuit decreases. When the thickness of the electrolyte layer 302 is less than or equal to 300 μm, operation at a high power can be easily performed regarding the battery 3000. That is, when the thickness of the electrolyte layer 302 has been adjusted appropriately, sufficient safety of the battery 3000 can be ensured, and, at the same time, the battery 3000 can be operated at a high power.

The thickness of the solid electrolyte sheet 201 included in the electrolyte layer 302 may be greater than or equal to 1 μm and less than or equal to 30 μm, may be greater than or equal to 1 μm and less than or equal to 15 μm,

or may be greater than or equal to 1 μm and less than or equal to 7.5 μm. When the thickness of the solid electrolyte sheet 201 is greater than or equal to 1 μm, the possibility that the positive electrode 301 and the negative electrode 303 short-circuit decreases. When the thickness of the solid electrolyte sheet 201 is less than or equal to 30 μm, operation at a high power is possible because of a reduced internal resistance of the battery 3000, and the energy density of the battery 3000 can be improved. The thickness of the solid electrolyte sheet 201 is defined by, for example, an average from multiple randomly chosen points (e.g., three points) in a cross-section parallel to the thickness direction.

The shape of a solid electrolyte included in the battery 3000 is not particularly limited. The shape of the solid electrolyte may be, for example, needle-like, spherical, or ellipsoidal. The shape of the solid electrolyte may be particulate.

At least one selected from the group consisting of the positive electrode 301 and the negative electrode 303 may contain an electrolyte material. For example, a solid electrolyte may be contained. The solid electrolyte can be a solid electrolyte listed as an example of a material that forms the solid electrolyte sheet 201. With this configuration, ionic conductivity (e.g., lithium-ion conductivity) inside the positive electrode 301 or negative electrode 303 improves, and operation at a high power can be performed regarding the battery 3000.

For the positive electrode 301 or negative electrode 303, a sulfide solid electrolyte may be used as the solid electrolyte, and a halide solid electrolyte as mentioned above may be used as a coating material that covers the active material.

The positive electrode 301 contains, for example, a material having properties of occluding and releasing metal ions (e.g., lithium ions) as a positive electrode active material. Examples of positive electrode active materials include lithium-containing transition metal oxides, transition metal fluorides, polyanionic materials, fluorinated polyanionic materials, transition metal sulfides, transition metal oxysulfides, and transition metal oxynitrides. Examples of lithium-containing transition metal oxides include $Li(Ni,Co,Al)O_2$, $Li(Ni,Co,Mn)O_2$, and $LiCoO_2$. When a lithium-containing transition metal oxide, for example, is used as a positive electrode active material, the manufacturing cost for the positive electrode 301 can be reduced, and the average discharge voltage of the battery 3000 can be improved at the same time. $Li(Ni,Co,Al)O_2$ means that any proportions of Ni, Co, and Al are contained. $Li(Ni,Co,Mn)O_2$ means that any proportions of Ni, Co, and Mn are contained.

When the shape of the solid electrolyte contained in the positive electrode 301 is particulate (e.g., spherical), the median diameter of the solid electrolyte may be less than or equal to 100 μm. When the median diameter of the solid electrolyte is less than or equal to 100 μm, the positive electrode active material and the solid electrolyte can disperse well in the positive electrode 301. Through this, the charge-discharge characteristics of the battery 3000 improve.

The median diameter of the solid electrolyte contained in the positive electrode 301 may be smaller than the median diameter of the positive electrode active material. This allows the solid electrolyte and the positive electrode active material to disperse well.

The median diameter of the positive electrode active material may be greater than or equal to 0.1 μm and less than or equal to 100 μm. When the median diameter of the positive electrode active material is greater than or equal to 0.1 μm, the positive electrode active material and the solid electrolyte can disperse well in the positive electrode 301. As a result of this, the charge-discharge characteristics of the battery 3000 improve. When the median diameter of the positive electrode active material is less than or equal to 100 μm, the lithium diffusion rate inside the positive electrode active material improves. Thus, the battery 3000 can operate at a high power.

For the positive electrode 301, the volume ratio "v1:(100 - v1)" of the positive electrode active material to the solid electrolyte may satisfy $30 \le v1 \le 95$. v1 represents the proportion by volume of the positive electrode active material when the total volume of the positive electrode active material and solid electrolyte contained in the positive electrode 301 is assumed to be 100. When $30 \le v1$ is satisfied, it is easy to ensure a sufficient energy density regarding the battery 3000. When $v3 \le 95$ is satisfied, operation at a high power can be performed more easily regarding the battery 3000.

The thickness of the positive electrode 301 may be greater than or equal to 10 μm and less than or equal to 500 μm. When the thickness of the positive electrode 301 is greater than or equal to 10 μm, a sufficient energy density can be easily ensured regarding the battery 3000. When the thickness of the positive electrode 301 is less than or equal to 500 μm, operation at a high power can be performed more easily regarding the battery 3000.

The negative electrode 303 contains, for example, a material having properties of occluding and releasing metal ions (e.g., lithium ions) as a negative electrode active material. Examples of negative electrode active materials include a metallic material, a carbon material, an oxide, a nitride, a tin compound, and a silicon compound. The metallic material may be an elemental metal or may be an alloy. Examples of metallic materials include lithium metal and lithium alloys. Examples of carbon materials include natural graphite, coke, graphitizing carbon, carbon fiber, spherical carbon, artificial graphite, and amorphous carbon. By silicon (Si), tin (Sn), a silicon compound, tin compound, or similar material being used, the capacity density of the battery 3000 can be improved. By using an oxide compound containing titanium (Ti) or niobium (Nb), the safety of the battery 3000 can be improved.

The median diameter of the negative electrode active material may be greater than or equal to 0.1 μm and less than or equal to 100 μm. When the median diameter of the negative electrode active material is greater than or equal to 0.1 μm, the negative electrode active material and the solid electrolyte can disperse well in the negative electrode 303. Through this, the charge-discharge characteristics of the battery 3000 improve. When the median diameter of the negative electrode active material is less than or equal to 100 $\mu$m, the lithium diffusion rate inside the negative electrode active material improves. Thus, the battery 3000 can operate at a high power.

The median diameter of the negative electrode active material may be larger than the median diameter of the solid electrolyte. This allows the solid electrolyte and the negative electrode active material to disperse well.

The volume ratio "v2:(100 - v2)" of the negative electrode active material to the solid electrolyte contained in the negative electrode 303 may satisfy $30 \leq v2 \leq 95$. v2 represents the proportion by volume of the negative electrode active material when the total volume of the negative electrode active material and solid electrolyte contained in the negative electrode 303 is assumed to be 100. When $30 \leq v2$ is satisfied, it is easy to ensure a sufficient energy density regarding the battery 3000. When $v2 \leq 95$ is satisfied, operation at a high power can be performed more easily regarding the battery 3000.

The thickness of the negative electrode 303 may be greater than or equal to 10 $\mu$m and less than or equal to 500 $\mu$m. When the thickness of the negative electrode 303 is greater than or equal to 10 $\mu$m, a sufficient energy density can be easily ensured regarding the battery 3000. When the thickness of the negative electrode 303 is less than or equal to 500 $\mu$m, operation at a high power can be performed more easily regarding the battery 3000.

The positive electrode active material and the negative electrode active material may be covered with a coating material in order that the interfacial resistance between the active materials and the solid electrolyte is reduced. The coating material can be a material having low electronic conductivity. The coating material can be an oxide material, oxide solid electrolyte, or similar material.

Examples of oxide materials that are used as coating materials include $SiO_2$, $Al_2O_3$, $TiO_2$, $B_2O_3$, $Nb_2O_5$, $WO_3$, and $ZrO_2$.

Examples of oxide solid electrolytes that are used as coating materials include Li-Nb-O compounds, such as $LiNbO_3$, Li-B-O compounds, such as $LiBO_2$ and $Li_3BO_3$, Li-Al-O compounds, such as $LiAlO_2$, Li-Si-O compounds, such as $Li_4SiO_4$, Li-Ti-O compounds, such as $Li_2SO_4$ and $Li_4Ti_5O_{12}$, Li-Zr-O compounds, such as $Li_2ZrO_3$, Li-Mo-O compounds, such as $Li_2MoO_3$, Li-V-O compounds, such as $LiV_2O_5$, Li-W-O compounds, such as $Li_2WO_4$, and Li-P-O compounds, such as $LiPO_4$. Oxide solid electrolytes have a high ionic conductivity and high high-potential stability. Through the use of an oxide solid electrolyte as a coating material, therefore, the charge-discharge efficiency of the battery 3000 can further improve.

At least one selected from the group consisting of the positive electrode 301, the electrolyte layer 302, and the negative electrode 303 may contain a binding agent for the purpose of improved adhesion between particles. Examples of binding agents include those mentioned above in relation to the binder 103. When the binding agent includes an elastomer, excellent flexibility and elasticity tend to be attained regarding each of the positive electrode 301, electrolyte layer 302, and negative electrode 303 included in the battery 3000. In that case, the durability of the battery 3000 tends to improve.

At least one selected from the group consisting of the positive electrode 301, the electrolyte layer 302, and the negative electrode 303 may contain a nonaqueous electrolyte solution, gel electrolyte, or ionic liquid for the purpose of easier exchange of lithium ions and improved power characteristics of the battery 3000.

The nonaqueous electrolyte solution contains a nonaqueous solvent and a lithium salt dissolved in the nonaqueous solvent. The nonaqueous solvent can be, for example, a cyclic carbonate solvent, linear carbonate solvent, cyclic ether solvent, linear ether solvent, cyclic ester solvent, linear ester solvent, or fluorinated solvent. Examples of cyclic carbonate solvents include ethylene carbonate, propylene carbonate, and butylene carbonate. Examples of linear carbonate solvents include dimethyl carbonate, ethyl methyl carbonate, and diethyl carbonate. Examples of cyclic ether solvents include tetrahydrofuran, 1,4-dioxane, and 1,3-dioxolane. Examples of linear ether solvents include 1,2-dimethoxyethane and 1,2-diethoxyethane. An example of a cyclic ester solvent is $\gamma$-butyrolactone. An example of a linear ester solvent is methyl acetate. Examples of fluorinated solvents include fluoroethylene carbonate, methyl fluoropropionate, fluorobenzene, fluoroethyl methyl carbonate, and fluorodimethylene carbonate. As the nonaqueous solvent, one nonaqueous solvent selected from these may be used alone, or a mixture of two or more nonaqueous solvents selected from these may be used.

In the nonaqueous electrolyte solution, at least one fluorinated solvent selected from the group consisting of fluoroethylene carbonate, methyl fluoropropionate, fluorobenzene, fluoroethyl methyl carbonate, and fluorodimethylene carbonate may be contained.

Examples of lithium salts include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these may be used alone, or a mixture of two or more lithium salts selected from these may be used. The concentration of the lithium salt in the nonaqueous electrolyte solution may be greater than or equal to 0.5 mol/liter and less than or equal to 2 mol/liter.

The gel electrolyte can be a material produced by soaking a polymeric material with a nonaqueous electrolyte solution. Examples of polymeric materials include polyethylene oxide, polyacrylonitrile, polyvinylidene fluoride, polymethyl methacrylate, and polymers having ethylene oxide linkages.

The cation that forms the ionic liquid may be, for example, an aliphatic linear quaternary cation, such as a tetraalkylammonium or tetraalkylphosphonium, an aliphatic cyclic ammonium, such as a pyrrolidinium, morpholinium, imidazolinium, tetrahydropyridinium, piperazinium, or piperidinium, or a nitrogen-containing heterocyclic aromatic cation, such as a pyridinium or imidazolium. The anion that forms the ionic liquid may be, for example, $PF_6^-$, $BF_4^-$, $SbF_6^-$, $AsF_6^-$, $SO_3CF_3^-$, $N(SO_2F)_2^-$, $N(SO_2CF_3)_2^-$, $N(SO_2C_2F_5)_2^-$, $N(SO_2CF_3)(SO_2C_4F_9)^-$, or $C(SO_2CF_3)_3^-$. The ionic liquid may contain a lithium salt.

At least one selected from the group consisting of the positive electrode 301 and the negative electrode 303 may contain a conductive additive for the purpose of improved electronic conductivity. Examples of conductive additives include graphites, such as natural graphite and artificial graphite, carbon blacks, such as acetylene black and Ketjenblack, electrically conductive fibers, such as carbon fibers and metallic fibers, electrically conductive powders, for example of fluorocarbons and aluminum, electrically conductive whiskers, for example of zinc oxide and potassium titanate, electrically conductive metal oxides, such as titanium oxide, and electrically conductive polymers, such as polyaniline, polypyrrole, and polythiophene. By using a carbon material as a conductive additive, cost reduction can be attempted.

Examples of shapes of the battery 3000 include coin-shaped, cylindrical, square, sheet-shaped, button-shaped, flat-plate, and multilayer.

EXAMPLES

The details of the present disclosure will now be described using examples and comparative examples. It should be noted that the solid electrolyte composition, multilayer body including a solid electrolyte sheet and an electrode, and battery according to the present disclosure are not limited to the following examples.

<EXAMPLE 1-1>

[Solvent]

In all steps below, the solvent was a commercially available dehydrated solvent or solvent dehydrated by nitrogen bubbling. The water content of the solvent was less than or equal to 10 ppm by mass.

[Production of a Binder Solution]

A binder solution was prepared by adding a solvent to a binder and dissolving or dispersing the binder in the solvent. The concentration of the binder in the binder solution was adjusted to greater than or equal to 5% by mass and less than or equal to 10% by mass. Then dehydration treatment by nitrogen bubbling was performed until the water content of the binder solution reached less than or equal to 10 ppm by mass.

In Example 1-1, the solvent in the binder solution was tetralin. The binder was a styrene-ethylene/butylene-styrene block copolymer (SEBS), which is a hydrogenated styrenic thermoplastic elastomer. The percentage of repeating units derived from styrene in the SEBS was 32% by mass. The weight-average molecular weight $M_w$ of the SEBS was 230,000.

[Production of a Dispersant Solution]

A dispersant was dehydrated by adding Molecular Sieves 4A 1/16 to the dispersant. A dispersant solution was prepared by adding, to the dehydrated dispersant, a solvent that had been dehydrated beforehand. The concentration of the dispersant in the dispersant solution was adjusted to 5% by mass.

In Example 1-1, the solvent in the dispersant solution was tetralin. The dispersant was DISPERBYK-109 (BYK Chemie Japan; base ingredient, a 1-hydroxyethyl-2-alkenylimidazoline; amine value, 140 mg KOH/g).

[Production of a Solid Electrolyte Composition]

In an argon glove box with a dew point of lower than or equal to -60°C, tetralin, the dispersant solution, and the binder solution were added to a $Li_2S-P_2S_5$ glass-ceramic (hereinafter described as "LPS"). The mixing of these materials was performed according to a ratio by mass of 100:1:0.25 (LPS:binder:dispersant). Then the resulting liquid mixture was subjected to shear dispersion and kneading using an in-line disperser-mill (IKA, magic LAB). Through this, a solid electrolyte composition of Example 1-1 was obtained. The solids concentration of the solid electrolyte composition was 51% by mass.

[Measurement of the Specific Surface Areas $S_\alpha$ and $S_\beta$]

First, measurement samples for the measurement of the specific surface areas $S_\alpha$ and $S_\beta$ were prepared. The measurement sample for the measurement of the specific surface area $S_\alpha$ was the LPS, a raw material for the solid electrolyte composition. The measurement sample for the measurement of the specific surface area $S_\beta$ was prepared by the following method. First, the drying of the solid electrolyte composition of Example 1-1 was performed in an argon glove box with a dew point of lower than or equal to -60°C. The drying of the solid electrolyte composition was performed by heating the composition at 100°C for 1 hour in a vacuum atmosphere. As a result of this, the solvent was removed from the solid electrolyte composition, and a solid substance was obtained. This solid substance was sufficiently loosened by hand and then heated at 100°C for 1 hour in a vacuum atmosphere again. Through this, an ion conductor as the measurement sample for the measurement of the specific surface area $S_\beta$ was obtained.

Then the specific surface areas $S_\alpha$ and $S_\beta$ were measured using these measurement samples. The measurement was performed using a high-accuracy gas adsorption analyzer (MicrotracBEL, BELSORP MINI X). As for the measurement samples, drying treatment was performed before the measurement by vacuum-heating the samples at 80°C for approximately 1 hour in sample tubes. In the measurement of the specific surface areas, the amount of nitrogen adsorbed on the measurement sample was measured by nitrogen gas adsorption first. The amount of adsorbed nitrogen was measured at about ten points at a relative pressure of greater than or equal to 0.05 and less than or equal to 0.30. Based on the data obtained, the specific surface areas $S_\alpha$ and $S_\beta$ were calculated by BET analysis.

For the solid electrolyte composition of Example 1-1, the ratio $S_\beta/S_\alpha$ of the specific surface area $S_\beta$ of the ion conductor to the specific surface area $S_\alpha$ of the solid electrolyte was 0.77. The solid electrolyte was an LPS, a sulfide solid electrolyte. The solvent was tetralin. The binder was an SEBS. The dispersant was DISPERBYK-109.

<EXAMPLE 1-2>

A solid electrolyte composition of Example 1-2 was produced by the same method as in Example 1-1 except that in the production of the solid electrolyte composition, the materials were mixed in a ratio by mass of 100:2:0.25 (LPS:binder:dispersant). For the solid electrolyte composition of Example 1-2, the ratio $S_\beta/S_\alpha$ was 0.72. The solid electrolyte was an LPS, a sulfide solid electrolyte. The solvent was tetralin. The binder was an SEBS. The dispersant was DISPERBYK-109.

<EXAMPLE 1-3>

A solid electrolyte composition of Example 1-3 was produced by the same method as in Example 1-1 except that the solids concentration of the solid electrolyte composition was adjusted to 45% by mass, that no dispersant was used, that the materials were mixed in a ratio by mass of 100:3 (LPS:binder), and that the liquid mixture was subjected to shear dispersion and kneading using a homogenizer (AS ONE, HG-200) and a generator (AS ONE, K-20S). For the solid electrolyte composition of Example 1-3, the ratio $S_\beta/S_\alpha$ was 0.70. The solid electrolyte was an LPS, a sulfide solid electrolyte. The solvent was tetralin. The binder was an SEBS.

<EXAMPLE 1-4>

A solid electrolyte composition of Example 1-4 was produced by the same method as in Example 1-3 except that the binder was a modified styrene-butadiene rubber (modified SBR). For the solid electrolyte composition of Example 1-4, the ratio $S_\beta/S_\alpha$ was 0.66. The solid electrolyte was an LPS, a sulfide solid electrolyte. The solvent was tetralin. The binder was a modified SBR.

<EXAMPLE 1-5>

A solid electrolyte composition of Example 1-5 was produced by the same method as in Example 1-1 except that in the production of the solid electrolyte composition, the materials were mixed in a ratio by mass of 100:3:0.25 (LPS:binder:dispersant). For the solid electrolyte composition of Example 1-5, the ratio $S_\beta/S_\alpha$ was 0.64. The solid electrolyte was an LPS, a sulfide solid electrolyte. The solvent was tetralin. The binder was an SEBS. The dispersant was DISPERBYK-109.

<EXAMPLE 1-6>

A solid electrolyte composition of Example 1-6 was produced by the same method as in Example 1-1 except that the binder was a modified SBR, that the materials were mixed in a ratio by mass of 100:3:0.25 (LPS:binder:dispersant), and that the liquid mixture was subjected to shear dispersion and kneading using a homogenizer (AS ONE, HG-200) and a generator (AS ONE, K-20S). For the solid electrolyte composition of Example 1-6, the ratio $S_\beta/S_\alpha$ was 0.63. The solid electrolyte was an LPS, a sulfide solid electrolyte. The solvent was tetralin. The binder was a modified SBR. The dispersant was DISPERBYK-109.

<EXAMPLE 1-7>

A solid electrolyte composition of Example 1-7 was produced by the same method as in Example 1-3 except that the solids concentration of the solid electrolyte composition was adjusted to 49% by mass and that the materials were mixed in a ratio by mass of 100:5:0.25 (LPS:binder:dispersant). For the solid electrolyte composition of Example 1-7, the ratio $S_\beta/S_\alpha$ was 0.50. The solid electrolyte was an LPS, a sulfide solid electrolyte. The solvent was tetralin. The binder was an SEBS. The dispersant was DISPERBYK-109.

<EXAMPLE 1-8>

A solid electrolyte composition of Example 1-8 was produced by the same method as in Example 1-3 except that the solids concentration of the solid electrolyte composition was adjusted to 41% by mass and that the materials were mixed in a ratio by mass of 100:8:0.25 (LPS:binder:dispersant). For the solid electrolyte composition of Example 1-8, the ratio $S_\beta/S_\alpha$ was 0.42. The solid electrolyte was an LPS, a sulfide solid electrolyte. The solvent was tetralin. The binder was an SEBS. The dispersant was DISPERBYK-109.

<COMPARATIVE EXAMPLE 1-1>

A solid electrolyte composition of Comparative Example 1-1 was produced by the same method as in Example 1-6 except that the binder was polyvinylidene fluoride (PVDF). For the solid electrolyte composition of Comparative Example 1-1, the ratio $S_\beta/S_\alpha$ was 1.00. The solid electrolyte was an LPS, a sulfide solid electrolyte. The solvent was tetralin. The binder was PVDF. The dispersant was DISPERBYK-109.

<COMPARATIVE EXAMPLE 1-2>

A solid electrolyte composition of Comparative Example 1-2 was produced by the same method as in Comparative Example 1-1 except that in the production of the solid electrolyte composition, the materials were mixed in a ratio by mass of 100:5:0.25 (LPS:binder:dispersant). For the solid electrolyte composition of Comparative Example 1-2, the ratio $S_\beta/S_\alpha$ was 1.06. The solid electrolyte was an LPS, a sulfide solid electrolyte. The solvent was tetralin. The binder was PVDF. The dispersant was DISPERBYK-109.

<COMPARATIVE EXAMPLE 1-3>

A solid electrolyte composition of Comparative Example 1-3 was produced by the same method as in Example 1-4 except that the solvent was diisobutyl ketone, that the solids concentration of the solid electrolyte composition was adjusted to 57% by mass, and that the materials were mixed in a ratio by mass of 100:0.5:0.25 (LPS:binder:dispersant). For the solid electrolyte composition of Comparative Example 1-3, the ratio $S_\beta/S_\alpha$ was 0.80. The solid electrolyte was an LPS, a sulfide solid electrolyte. The solvent was diisobutyl ketone. The binder was a modified SBR. The dispersant was DISPERBYK-109.

<COMPARATIVE EXAMPLE 1-4>

A solid electrolyte composition of Comparative Example 1-4 was produced by the same method as in Example 1-8 except that the solids concentration of the solid electrolyte composition was adjusted to 37% by mass and that the materials were mixed in a ratio by mass of 100:12:0.25 (LPS:binder:dispersant). For the solid electrolyte composition of Comparative Example 1-4, the ratio $S_\beta/S_\alpha$ was 0.35. The solid electrolyte was an LPS, a sulfide solid electrolyte. The solvent was tetralin. The binder was an SEBS. The dispersant was DISPERBYK-109.

<COMPARATIVE EXAMPLE 1-5>

A solid electrolyte composition of Comparative Example 1-5 was produced by the same method as in Example 1-8 except that the solids concentration of the solid electrolyte composition was adjusted to 37% by mass and that the materials were mixed in a ratio by mass of 100:15:0.25 (LPS:binder:dispersant). For the solid electrolyte composition of Comparative Example 1-5, the ratio $S_\beta/S_\alpha$ was 0.28. The solid electrolyte was an LPS, a sulfide solid electrolyte. The solvent was tetralin. The binder was an SEBS. The dispersant was DISPERBYK-109.

<COMPARATIVE EXAMPLE 1-6>

A solid electrolyte composition of Comparative Example 1-6 was produced by the same method as in Comparative Example 1-5 except that the solvent in the binder solution was mixed xylenes and that the materials were mixed in a ratio by mass of 100:20:0.25 (LPS:binder:dispersant). For the solid electrolyte composition of Comparative Example 1-6, the mixed xylenes was a solvent mixture containing o-xylene, m-xylene, p-xylene, and ethylbenzene in a ratio by mass of 24:42:18:16. The ratio $S_\beta/S_\alpha$ was 0.19. The solid electrolyte was an LPS, a sulfide solid electrolyte. The solvent was a solvent mixture of mixed xylenes and tetralin. The binder was an SEBS. The dispersant was DISPERBYK-109.

<REFERENCE EXAMPLE 1-1>

A solid electrolyte composition of Reference Example 1-1 was produced by the same method as in Example 1-3 except that no binder and no dispersant were used. For the solid electrolyte composition of Reference Example 1-1, the ratio $S_\beta/S_\alpha$ was 1.00. The solid electrolyte was an LPS, a sulfide solid electrolyte.

<REFERENCE EXAMPLE 1-2>

A solid electrolyte composition of Reference Example 1-2 was produced by the same method as in Example 1-6 except that no binder was used. For the solid electrolyte composition of Reference Example 1-2, the ratio $S_\beta/S_\alpha$ was 0.97. The solid electrolyte was an LPS, a sulfide solid electrolyte. The dispersant was DISPERBYK-109.

<Evaluation of the Solid Electrolyte Compositions>

[Measurement of the Percentage Solvent Retention]

For the solid electrolyte compositions of Examples 1-1 to 1-8, Comparative Examples 1-1 to 1-6, and Reference Examples 1-1 and 1-2, the percentage solvent retention was measured by the method described above. The measurement of the percentage solvent retention was performed in a dry room with a dew point of lower than or equal to -40°C. The electrode was a negative electrode formed through the application of a mixture composed of graphite, an LPS, a modified SBR, ethyl cellulose, and a dispersant onto roughened nickel foil. In the mixture, the materials were composed according to a ratio by mass of 70:30:1:0.25:0.05 (graphite:LPS:modified SBR:ethyl cellulose: dispersant). The thickness of the roughened nickel foil was 12 $\mu$m. The thickness of the negative electrode was 110 $\mu$m. The packing density of the negative electrode was 55%.

[Measurement of the Percentage Maintenance of Ionic Conductivity]

For the ion conductors contained in the solid electrolyte compositions of Examples 1-1 to 1-8 and Comparative Examples 1-1 to 1-6 and the solid electrolytes contained in the solid electrolyte compositions of Reference Examples 1-1 and 1-2, the percentage maintenance of ionic conductivity was measured by the following method. First, the ion conductor or solid electrolyte was obtained from the solid electrolyte composition by the method described above in relation to the specific surface area $S_\beta$. Then 100 mg of the ion conductor or solid electrolyte was put into an electrically insulating casing and pressure-molded at a pressure of 740 MPa. Then stainless-steel pins were placed on the top and bottom of the compression-molded ion conductor or solid electrolyte. To the stainless-steel pins, current-collecting lead wires were attached. Then the inside of the electrically insulating casing was insulated from the outside atmosphere and tightly sealed using an electrically insulating ferrule. Lastly, the resulting battery was immobilized using four bolts from above and below, and a specific pressure of 150 MPa was applied to the ion conductor or solid electrolyte; in this manner, a sample for measuring ionic conductivity was produced. This sample was placed in a temperature-controlled chamber at 25°C. Using a potentiostat/galvanostat (Solartron Analytical, 1470E) and a frequency response analyzer (Solartron Analytical, 1255B), the ionic conductivity of the samples was determined by the electrochemical AC impedance method. Based on the results obtained, the percentage of the ionic conductivity of the ion conductor or solid electrolyte to the ionic conductivity of the LPS, a raw material for the solid electrolyte composition, was calculated. Through this, the percentage maintenance of ionic conductivity was identified for the ion conductors contained in the solid electrolyte compositions of Examples 1-1 to 1-8 and Comparative Examples 1-1 to 1-6 and the solid electrolytes contained in the solid electrolyte compositions of Reference Examples 1-1 and 1-2.

The results of these measurements are presented in Table 1.

[Table 1]

| | Ratio $S_\beta/S_\alpha$ | Type of the binder | Type of the solvent | Dispersant | Percentage solvent retention (%) | Percentage maintenance of ionic conductivity (%) |
|---|---|---|---|---|---|---|
| Example 1-1 | 0.77 | SEBS | Tetralin | Yes | 27 | 71 |
| Example 1-2 | 0.72 | SEBS | Tetralin | Yes | 40 | 63 |
| Example 1-3 | 0.70 | SEBS | Tetralin | No | 51 | 49 |
| Example 1-4 | 0.66 | Modified SBR | Tetralin | No | 53 | 44 |
| Example 1-5 | 0.64 | SEBS | Tetralin | Yes | 64 | 51 |
| Example 1-6 | 0.63 | Modified SBR | Tetralin | Yes | 64 | 54 |
| Example 1-7 | 0.50 | SEBS | Tetralin | Yes | 87 | 41 |
| Example 1-8 | 0.42 | SEBS | Tetralin | Yes | 79 | 39 |
| Comparative Example 1-1 | 1.00 | PVDF | Tetralin | Yes | 15 | 88 |
| Comparative Example 1-2 | 1.06 | PVDF | Tetralin | Yes | 15 | 80 |
| Comparative Example 1-3 | 0.80 | Modified SBR | Diisobutyl ketone | No | 15 | 80 |
| Comparative Example 1-4 | 0.35 | SEBS | Tetralin | Yes | 78 | 5.6 |
| Comparative Example 1-5 | 0.28 | SEBS | Tetralin | Yes | 81 | 2.4 |
| Comparative Example 1-6 | 0.19 | SEBS | Tetralin/ Mixed xylenes | Yes | 86 | 0.76 |
| Reference Example 1-1 | 1.00 | None | Tetralin | No | 19 | 88 |
| Reference Example 1-2 | 0.97 | None | Tetralin | Yes | 22 | 78 |

As can be seen from Table 1, the solid electrolyte compositions of the Examples, for which the ratio $S_\beta/S_\alpha$ is greater than 0.40 and less than 0.80, achieved a high percentage solvent retention and a high percentage maintenance of ionic conductivity at the same time unlike the solid electrolyte compositions of the Comparative Examples. It should be noted that in Reference Examples 1-1 and 1-2, the specific surface area $S_\alpha$ represents the specific surface area of the solid electrolyte used as a raw material. The specific surface area $S_\beta$ represents the specific surface area of the solid electrolyte after the production of the solid electrolyte composition. As can be seen from Table 1, in Reference Examples 1-1 and 1-2, the ratio $S_\beta/S_\alpha$ was approximately 1. That is, in Reference Examples 1-1 and 1-2, the specific surface area of the solid electrolyte changed little during the course of manufacture of the solid electrolyte composition. From these results, it is presumed that for the solid electrolyte compositions of the Examples and Comparative Examples, too, little change in the specific surface area of the solid electrolyte caused by excessive breakage, sintering, etc., occurred in the course of their manufacture.

<EXAMPLE 2-1>

[Production of Multilayer Bodies Including a Solid Electrolyte Sheet and an Electrode]

In an argon glove box with a dew point of lower than or equal to -60°C, coatings were produced by applying the solid electrolyte composition of Example 1-1 onto negative electrodes using a die coater. The negative electrodes contained graphite, silicon, an LPS, and a modified SBR. For the negative electrodes, no pressing step was performed beforehand. In the application of the solid electrolyte composition, three coatings varying in wet film thickness were produced by intermittent coating with a coating width of 98 mm and a length of 150 mm. The wet film thicknesses of the three coatings were 60 μm, 50 μm, and 40 μm. Multilayer bodies of Example 2-1 were produced by drying the resulting coatings by hot-air drying at higher than or equal to 80°C and lower than or equal to 110°C.

<EXAMPLE 2-2>

Multilayer bodies of Example 2-2 were produced by the same method as in Example 2-1 except that the solid electrolyte composition was the solid electrolyte composition of Example 1-2.

<EXAMPLE 2-3>

Multilayer bodies of Example 2-3 were produced by the same method as in Example 2-1 except that the solid electrolyte composition was the solid electrolyte composition of Example 1-5.

<COMPARATIVE EXAMPLE 2-1>

Multilayer bodies of Comparative Example 2-1 were produced by the same method as in Example 2-1 except that the solid electrolyte composition was the solid electrolyte composition of Comparative Example 1-3.

<Evaluation of the Multilayer Bodies>

For the multilayer bodies of Examples 2-1 to 2-3 and Comparative Example 2-1, the solid electrolyte sheet was observed visually. The results are presented in Table 2. In Table 2, "Good" means that the result was good, with no streaks on the solid electrolyte sheet. "Poor" means that the result was poor, with streaks on the solid electrolyte sheet.

[Table 2]

|  | Ratio $S_\beta/S_\alpha$ | Percentage solvent retention (%) | Streaks on the solid electrolyte sheet | | |
|---|---|---|---|---|---|
|  |  |  | Wet film thickness 60 μm | Wet film thickness 50 μm | Wet film thickness 40 μm |
| Example 2-1 | 0.77 | 27 | Good | Poor | Poor |
| Example 2-2 | 0.72 | 40 | Good | Good | Poor |
| Example 2-3 | 0.64 | 64 | Good | Good | Good |
| Comparative Example 2-1 | 0.80 | 15 | Poor | Poor | Poor |

As shown in Table 2, for the multilayer bodies of Examples 2-1 to 2-3, the solid electrolyte sheets produced under 60 μm wet film thickness conditions achieved a good result, with reduced formation of streaks. The weight per unit area of these solid electrolyte sheets was 4.1 mg/cm². The thickness after compression treatment for these solid electrolyte sheets was 21 μm. As for the multilayer bodies of Comparative Example 2-1, the solid electrolyte sheet produced under 60 μm wet film thickness conditions had a poor result, with the formation of streaks.

In Comparative Example 2-1, the solid electrolyte composition of Comparative Example 1-3, for which the ratio $S_\beta/S_\alpha$ is large, was used. With this solid electrolyte composition, the percentage solvent retention was low, and it was difficult to produce a good coating. Because of this, presumably, the multilayer bodies of Comparative Example 2-1 experienced the formation of streaks on their solid electrolyte sheet.

As shown in Table 2, for the multilayer bodies of Examples 2-2 and 2-3, the solid electrolyte sheets produced under 50 μm wet film thickness conditions achieved a good result, with reduced formation of streaks. The weight per unit area of these solid electrolyte sheets was 3.3 mg/cm². The thickness after compression treatment for these solid electrolyte sheets was 17 μm.

As shown in Table 2, for the multilayer bodies of Example 2-3, the solid electrolyte sheet produced under 40 μm wet film thickness conditions achieved a good result, with reduced formation of streaks. The weight per unit area of this solid electrolyte sheet was 2.7 mg/cm². The thickness after compression treatment for this solid electrolyte sheet

was 14 μm.

As can be seen from Tables 1 and 2, with the solid electrolyte compositions of the Examples, for which the ratio $S_\beta/S_\alpha$ is greater than 0.40 and less than 0.80, a solid electrolyte sheet with reduced formation of defects such as streaks was successfully produced with a limited loss of ionic conductivity. Overall, the solid electrolyte compositions of the Examples were suitable for the wet-on-dry technique.

Industrial Applicability

The solid electrolyte composition according to the present disclosure can be used for, for example, the manufacture of all-solid-state lithium-ion secondary batteries. Reference Signs List

101 solid electrolyte
102 solvent
103 binder
111 ion conductor
201 solid electrolyte sheet
202 electrode
301 positive electrode
302 electrolyte layer
303 negative electrode
1000 solid electrolyte composition
2000 multilayer body
3000 battery

**Claims**

1. A solid electrolyte composition comprising:

   a solvent; and
   an ion conductor dispersed in the solvent, the ion conductor including a solid electrolyte and a binder, wherein:
   $0.40 < S_\beta/S_\alpha < 0.80$ is satisfied, where $S_\alpha$ represents a specific surface area of the solid electrolyte, and $S_\beta$ represents a specific surface area of the ion conductor.

2. The solid electrolyte composition according to claim 1, wherein:
   $0.45 < S_\beta/S_\alpha < 0.75$ is satisfied.

3. The solid electrolyte composition according to claim 1 or 2, wherein:
   $0.45 < S_\beta/S_\alpha < 0.70$ is satisfied.

4. The solid electrolyte composition according to any one of claims 1 to 3, wherein:
   the binder includes an elastomer.

5. The solid electrolyte composition according to claim 4, wherein:
   the elastomer includes a repeating unit derived from styrene.

6. The solid electrolyte composition according to any one of claims 1 to 5, wherein:
   the solvent includes an aromatic hydrocarbon.

7. The solid electrolyte composition according to claim 6, wherein:
   the solvent includes tetralin.

8. The solid electrolyte composition according to any one of claims 1 to 7, further comprising:
   a dispersant.

9. The solid electrolyte composition according to claim 8, wherein:
   the dispersant includes an amine compound.

**10.** The solid electrolyte composition according to claim 9, wherein:
the dispersant includes imidazoline or an imidazoline derivative.

**11.** A method for manufacturing a multilayer body including a solid electrolyte sheet and an electrode, the method comprising:

applying the solid electrolyte composition according to any one of claims 1 to 10 onto an electrode to form a coating; and
removing the solvent from the coating to produce a solid electrolyte sheet.

**12.** A method for manufacturing a battery, the method comprising:

applying the solid electrolyte composition according to any one of claims 1 to 10 onto a first electrode to form a coating;
removing the solvent from the coating to produce a solid electrolyte sheet; and
placing a second electrode on the solid electrolyte sheet.

# FIG. 1

# FIG. 2

# FIG. 3

```
        ┌─────────────┐
        │    START    │
        └─────────────┘
               │
               ▼
   ┌───────────────────────┐
   │    KNEADING STEP      │──── S01
   └───────────────────────┘
               │
               ▼
   ┌───────────────────────┐
   │   APPLICATION STEP    │──── S02
   └───────────────────────┘
               │
               ▼
   ┌───────────────────────┐
   │     DRYING STEP       │──── S03
   └───────────────────────┘
               │
               ▼
        ┌─────────────┐
        │     END     │
        └─────────────┘
```

# FIG. 4

## 2000

201
202

# FIG. 5

## 3000

301
302
303

## INTERNATIONAL SEARCH REPORT

| | |
|---|---|
| | International application No. |
| | **PCT/JP2022/020306** |

**A. CLASSIFICATION OF SUBJECT MATTER**

*H01B 1/06*(2006.01)i; *H01B 1/12*(2006.01)i; *H01M 10/0562*(2010.01)i; *H01M 10/0565*(2010.01)i; *H01M 10/0585*(2010.01)i
FI: H01B1/06 A; H01M10/0565; H01M10/0585; H01B1/12 Z; H01M10/0562

According to International Patent Classification (IPC) or to both national classification and IPC

**B. FIELDS SEARCHED**

Minimum documentation searched (classification system followed by classification symbols)
H01B1/06; H01B1/12; H01M10/0562; H01M10/0565; H01M10/0585

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/135322 A1 (PANASONIC INTELLECTUAL PROPERTY MANAGEMENT CO., LTD.) 11 July 2019 (2019-07-11) paragraphs [0009]-[0184], fig. 1-3 | 1-12 |
| A | WO 2019/146236 A1 (PANASONIC INTELLECTUAL PROPERTY MANAGEMENT CO., LTD.) 01 August 2019 (2019-08-01) paragraphs [0010]-[0213], fig. 1-2 | 1-12 |
| A | WO 2019/146308 A1 (PANASONIC INTELLECTUAL PROPERTY MANAGEMENT CO., LTD.) 01 August 2019 (2019-08-01) paragraphs [0009]-[0230], fig. 1-3 | 1-12 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 July 2022** | **02 August 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/020306**

| Patent document cited in search report | | | Publication date (day/month/year) | Patent family member(s) | | | Publication date (day/month/year) |
|---|---|---|---|---|---|---|---|
| WO | 2019/135322 | A1 | 11 July 2019 | US | 2020/0328467 | A1 | |
| | | | | paragraphs [0022]-[0249], fig. 1-3 | | | |
| | | | | EP | 3736892 | A1 | |
| | | | | CN | 111492517 | A | |
| WO | 2019/146236 | A1 | 01 August 2019 | US | 2020/0350626 | A1 | |
| | | | | paragraphs [0020]-[0255], fig. 1-2 | | | |
| | | | | EP | 3745499 | A1 | |
| | | | | CN | 111566851 | A | |
| WO | 2019/146308 | A1 | 01 August 2019 | US | 2020/0343554 | A1 | |
| | | | | paragraphs [0012]-[0273], fig. 1-3 | | | |
| | | | | EP | 3745504 | A1 | |
| | | | | CN | 111201643 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020126777 A